# EUROPEAN PATENT SPECIFICATION

(11) **EP 4 622 240 B1**
(45) Date of publication and mention of the grant of the patent: **23.09.2026**
(21) Application number: 25163117.2
(22) Date of filing: 11.03.2025
(51) Int. Cl.: H04N 1/00, G06K 15/02, H04N 1/60

(54) **PRINTING SYSTEM, PROGRAM, AND PRINTING CHARACTERISTIC ADJUSTMENT METHOD**
DRUCKSYSTEM, PROGRAMM UND VERFAHREN ZUR EINSTELLUNG VON DRUCKEIGENSCHAFTEN
SYSTÈME D'IMPRESSION, PROGRAMME ET PROCÉDÉ DE RÉGLAGE DE CARACTÉRISTIQUE D'IMPRESSION

(30) Priority: 21.03.2024 JP 2024044787
(43) Date of publication of application: 24.09.2025
(73) Proprietor: Seiko Epson Corporation, Tokyo 160-8801 (JP)
(72) Inventor: YOSHIKAWA, Eishin, Suwa-shi, Nagano, 392-8502 (JP)
(74) Representative: MERH-IP Matias Erny Reichl Hoffmann Patentanwälte PartG mbB

(56) References cited:
- JP-A- 2016 215 452
- US-A- 4 344 683

## Description

### BACKGROUND

### 1. Technical Field

The present disclosure relates to a printing system that images a medium having a test pattern for printing characteristics adjustment, a program, and a printing characteristic adjustment method.

### 2. Related Art

There is a case where a test pattern used to adjust the printing characteristics of a printing apparatus such as an inkjet printer is read by a scanner.

JP-A-2006-121486 discloses a printing correction method for generating printing correction data by using a digital camera to image a printing correction test pattern printed by a printer.

JP-A-2006-121486 is an example of the related art.

When an imaging section is shaken, the test pattern included in the image from the imaging section is blurred, and there is a possible case where the test pattern included in the captured image cannot be used. In particular, when the imaging section is rotated, tilted, or shaken in any other manner, it is conceivable that the resultant image blur is not properly sensed because the image has a portion where the image is blurred by a large amount and a portion where the image is blurred by a small amount.

Patent document US4344683 discloses a quality control method and apparatus for photographic pictures, wherein in case of a blurred image, it is possible to determine whether the cause of blurring occurred in the camera or during printing, by examining the test pattern which, if blurring occurred in the camera, will be sharp but will itself be blurred if the blurring of the image occurred during printing.

### SUMMARY

A printing system according to an aspect of the present disclosure includes:
a printing apparatus including a recording head and configured to form a test pattern used to adjust printing characteristics on a medium;
an imaging section configured to image the medium; and
a control section configured to cause the imaging section to image an imaging target region including the test pattern,
the printing apparatus is configured to form multiple blur sensing regions used to sense a shake of the imaging section on the medium, the multiple blur sensing regions including a first blur sensing region and a second blur sensing region,
the multiple blur sensing regions are included in the imaging target region of the medium,
the first and second blur sensing regions are located at positions where the two blur sensing region sandwich at least one of a straight line passing through a center of the imaging target region and the test pattern, and
the control section is configured to acquire an image of the imaging target region from the imaging section, sense whether the first blur sensing region included in the image is blurred and whether the second blur sensing region included in the image is blurred, and determine that the test pattern included in the image is not blurred when the control section senses that none of the first and second blur sensing regions is blurred.

A non-transitory computer-readable storage medium storing a program according to another aspect of the present disclosure is a non-transitory computer-readable storage medium storing a program for determining a blur of a test pattern included in an image acquired from an imaging section configured to image a medium having the test pattern, the test pattern used to adjust printing characteristics of a printing apparatus including a recording head,
the medium having an imaging target region having multiple blur sensing regions used to sense a shake of the imaging section, the multiple blur sensing regions including a first blur sensing region and a second blur sensing region,
the first and second blur sensing regions are located at positions where the two blur sensing region sandwich at least one of a straight line passing through a center of the imaging target region and the test pattern,
the program configured to cause a computer to realize
an acquisition function of acquiring an image of the imaging target region from the imaging section, and
a determination function of sensing whether the first blur sensing region included in the image is blurred and whether the second blur sensing region included in the image is blurred, and determining that the test pattern included in the image is not blurred when the determination function senses that none of the first and second blur sensing regions is blurred.

A printing characteristic adjustment method according to still another aspect of the present disclosure is a printing characteristic adjustment method for causing an imaging section to image a medium having an imaging target region including a test pattern used to adjust printing characteristics of a printing apparatus including a recording head and adjusting the printing characteristics based on the test pattern included in a resultant captured image,
the imaging target region of the medium having multiple blur sensing regions used to sense a shake of the imaging section, the multiple blur sensing regions including a first blur sensing region and a second blur sensing region,
the first and second blur sensing regions located at positions where the two blur sensing region sandwich at least one of a straight line passing through a center of the imaging target region and the test pattern,
the printing characteristic adjustment method comprising:
   a first step of acquiring an image of the imaging target region from the imaging section;
   a second step of sensing whether the first blur sensing region included in the image is blurred and whether the second blur sensing region included in the image is blurred, and acquiring the captured image when it is sensed that none of the first and second blur sensing regions is blurred;
   a third step of determining an adjustment value used to adjust the printing characteristics based on the test pattern included in the captured image; and
   a fourth step of adjusting the printing characteristic based on the adjustment value.

### BRIEF DESCRIPTION OF THE DRAWINGS

FIG. 1 diagrammatically shows an example of a printing system.
FIG. 2 diagrammatically shows an example of the configuration of the printing system.
FIG. 3 schematically shows an example of a medium having a test pattern.
FIGS. 4A to 4C diagrammatically show examples of an imaging target region.
FIGS. 5A to 5D diagrammatically show examples of a blur sensing region.
FIG. 6 diagrammatically shows an example of the operation of an information terminal that is performing imaging.
FIG. 7 is a flowchart diagrammatically showing an example of printing characteristic adjustment.
FIG. 8A diagrammatically shows a case where an image from an imaging section is rotated around a first blur sensing region and therefore blurred, and FIG. 8B diagrammatically shows a case where the image from the imaging section is rotated around a second blur sensing region and therefore blurred.
FIG. 9A diagrammatically shows an example of an image including a first test pattern, the first blur sensing region, and the second blur sensing region, and FIG. 9B diagrammatically shows an example of an image including a second test pattern, the second blur sensing region, and a third blur sensing region.
FIG. 10 diagrammatically shows an example of the printing characteristics adjustment.
FIG. 11 is a flowchart diagrammatically showing an example of imaging control.
FIG. 12 diagrammatically shows that an image from the imaging section is rotated around a blur sensing region and therefore blurred in Comparative Example.

### DESCRIPTION OF EMBODIMENTS

An embodiment of the present disclosure will be described below. The embodiment below, of course, merely shows an example of the present disclosure, and all the features shown in the embodiment are not necessarily essential to the solution disclosed herein.

### (1) Overview of aspects included in present disclosure:

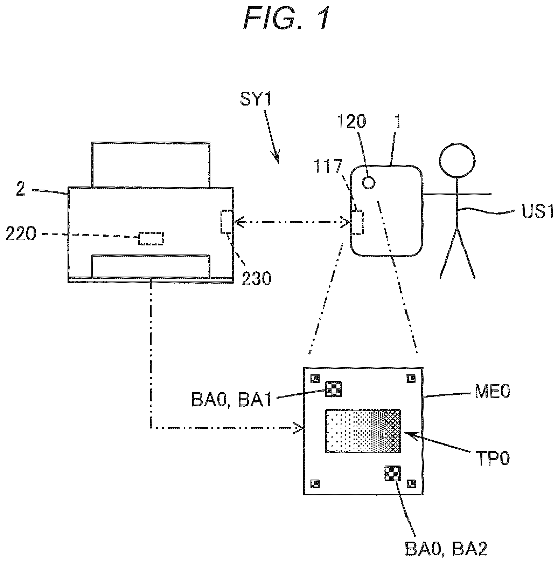

An overview of aspects included in the present disclosure will first be described with reference to examples shown in FIGS. 1 to 12. Note that the figures in the present application diagrammatically show examples, and that the magnification in each direction shown in the figures may vary, so that the figures may not be consistent in magnification. Each element in the aspects of the present disclosure is, of course, not limited to the specific example indicated by the reference character. In "Overview of aspects included in present disclosure", a term in parentheses means supplementary description of the term immediately before the parentheses.

### First aspect

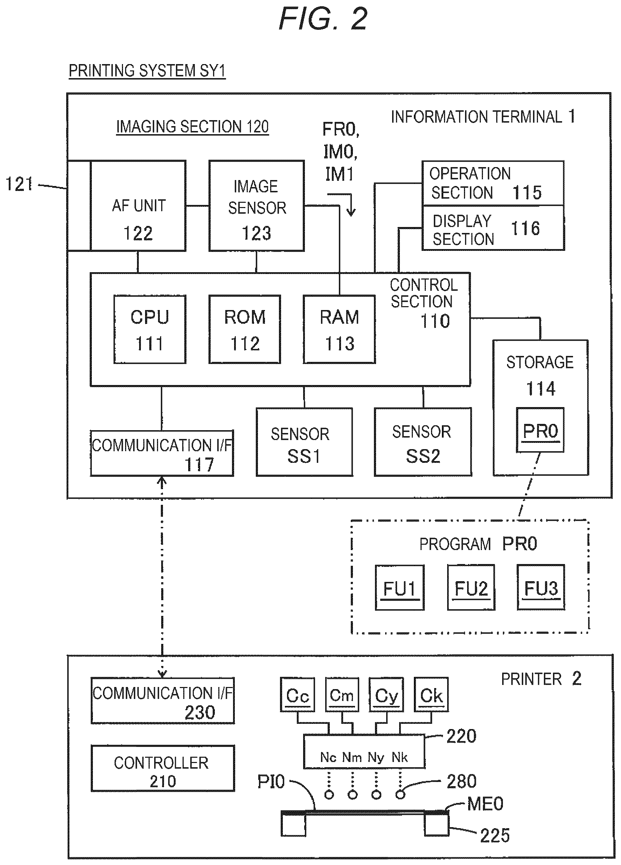

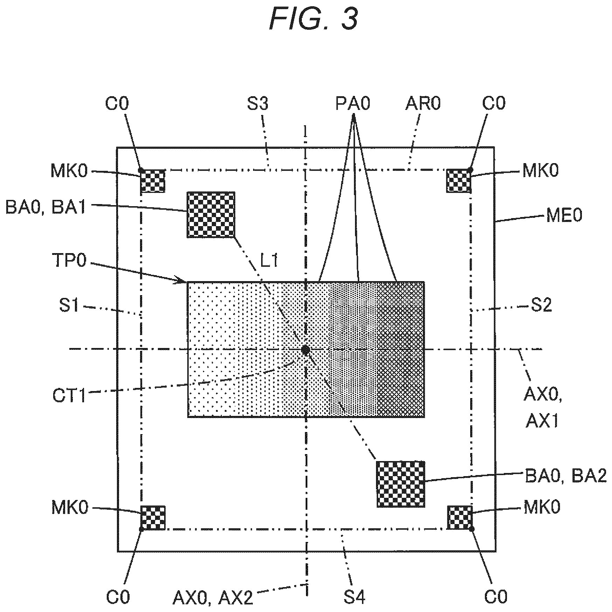

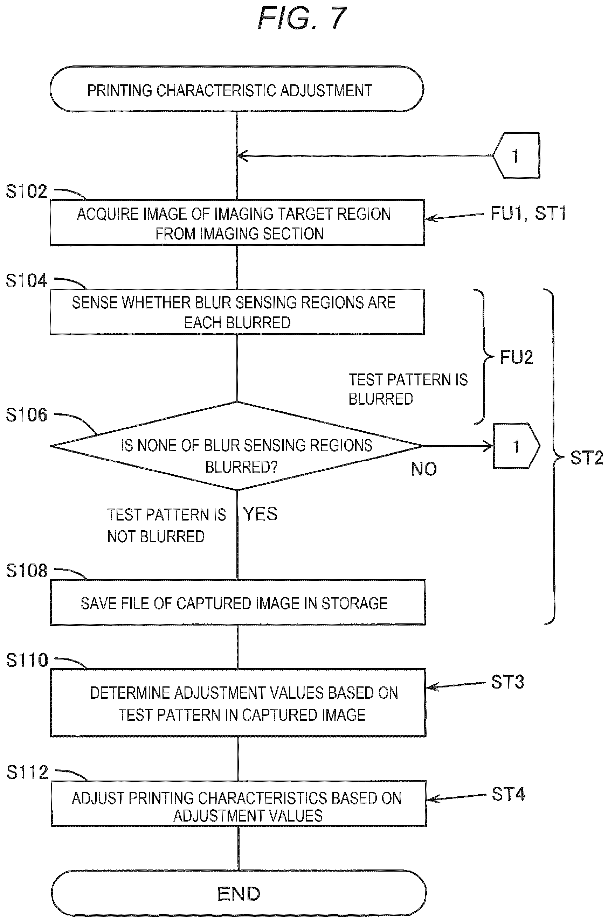

A printing system SY1 according to an aspect includes a printing apparatus (printer 2, for example) including a recording head 220, an imaging section 120, and a control section 110, as shown in FIGS. 1 and 2 by way of example. The printing apparatus (2) forms a print image PI0 on a medium ME0, the print image PI0 including a test pattern TP0 used to adjust the printing characteristics of the printing apparatus. The imaging section 120 images the medium ME0 having the test pattern TP0. The control section 110 causes the imaging section 120 to image an imaging target region AR0 (see FIG. 3) including the test pattern TP0. The printing apparatus (2) forms, at the medium ME0, multiple blur sensing regions BA0 used to sense a shake of the imaging section 120, the multiple shake sensing regions BA0 including a first blur sensing region BA1 and a second blur sensing region BA2. When the multiple blur sensing regions BA0 are included in the imaging target region AR0, the first blur sensing region BA1 and the second blur sensing region BA2 are located at positions where the two regions sandwich at least one of straight lines (symmetry axis AX0, for example) passing through a center CT1 of the imaging target region AR0 and the test pattern TP0. The control section 110 acquires an image IM1 of the imaging target region AR0 from the imaging section 120, senses whether the first blur sensing region BA1 included in the image IM1 is blurred and whether the second blur sensing region BA2 included in the image IM1 is blurred, and determines that the test pattern TP0 included in the image IM1 is not blurred when the result of the sensing shows that neither the first blur sensing region BA1 nor the second blur sensing region BA2 is blurred, as shown in FIG. 7 by way of example.

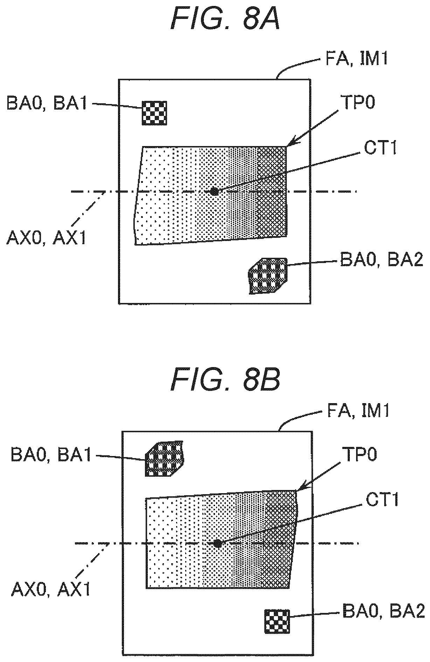

For example, even when no blur is sensed in the first blur sensing region BA1 in the image IM1, but when a rotary blur around the first blur sensing region BA1 occurs as shown in FIG. 8A by way of example, the test pattern TP0 in the image IM1 is blurred. Since the first blur sensing region BA1 and the second blur sensing region BA2 are located at positions where the two regions sandwich at least one of the straight lines described above (AX0) and the test pattern TP0, when a rotary blur around the first blur sensing region BA1 occurs, it is sensed that the second blur sensing region BA2 in the image IM1 is blurred, so that it is not determined that the test pattern TP0 in the image IM1 is not blurred. Of course, even when it is not sensed that the second blur sensing region BA2 in the image IM1 is blurred, but when it is sensed that the first blur sensing region BA1 in the image IM1 is blurred as shown in FIG. 8B by way of example, it is not determined that the test pattern TP0 in the image IM1 is not blurred. The same applies to a case where the imaging section 120 tilted with respect to one of the blur sensing regions (BA1 and BA2) and therefore blurred. The aspect described above can therefore provide a printing system capable of accurately determining that the test pattern included in an image from the imaging section is not blurred.

Various examples of the aspect described above are conceivable.

Examples of the printing characteristics may include the density of a print image, the position where each droplet lands, the transportation length of a medium, and the droplet discharge state at each nozzle.

Examples of the test pattern may include a density pattern used to adjust the density of a print image, a Bi-d adjustment pattern used to perform Bi-d adjustment (bidirectional adjustment) for aligning the droplet landing positions in the forward and backward paths with each other, a transportation length adjustment pattern used to adjust the transportation length of a medium on which a print image is formed, and a nozzle check pattern indicating the droplet discharge state at each nozzle of the recording head.

Examples of the imaging target region may include the entire medium and a region defined by multiple position detection patterns.

An image acquired by the control section from the imaging section may be a captured image, frames that constitute a video, or the like.

The imaging section may be outside the printer or may be inside the printer.

The control section may be outside the printer or may be inside the printer.

In the sensing of whether any of the blur sensing regions is blurred, the state in which the blur sensing region is not blurred includes not only the state in which no motion of the blur sensing region is observed at all but also the state in which the motion of the blur sensing region falls within an allowable range. The state in which the test pattern is not blurred includes not only the state in which no motion of the test pattern is observed at all but also the state in which the motion of the test pattern falls within an allowable range.

In the present application, "first", "second", and so on are terms used to identify each of multiple elements having similarities, and do not mean the order of the elements.

The additional remarks described above, of course, also apply to the following aspects.

### Second aspect

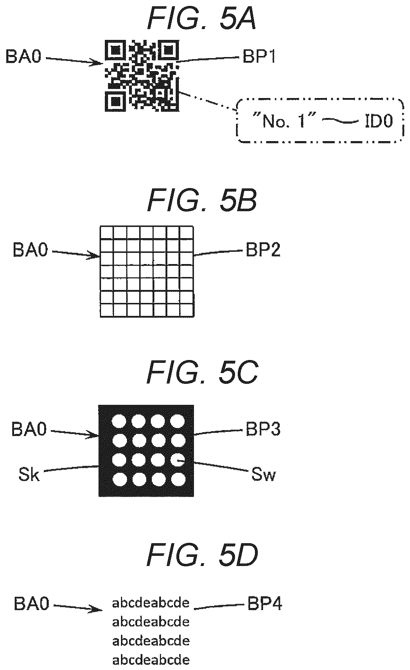

The multiple blur sensing regions BA0 may include readable code information BP1, as shown in FIG. 5A by way of example. The control section 110 may sense that the first blur sensing region BA1 included in the image IM1 is not blurred when the code information BP1 in the first blur sensing region BA1 included in the image IM1 can be read. The control section 110 may sense that the second blur sensing region BA2 included in the image IM1 is not blurred when the code information BP1 in the second blur sensing region BA2 included in the image IM1 can be read.

In the case described above, a preferable example in which it is accurately determined that the test pattern included in an image from the imaging section is not blurred can be provided.

### Third aspect

Identification information ID0 that allows identification of each of the blur sensing regions BA0 may be embedded in the code information BP1, as shown in FIG. 5A by way of example. The control section 110 may read the code information BP1 included in the image IM1, and identify the test pattern TP0 to be read from the image IM1 based on the identification information ID0 embedded in the code information BP1.

In the case described above, a preferable example in which a test pattern to be read from an image is identified can be provided.

### Fourth aspect

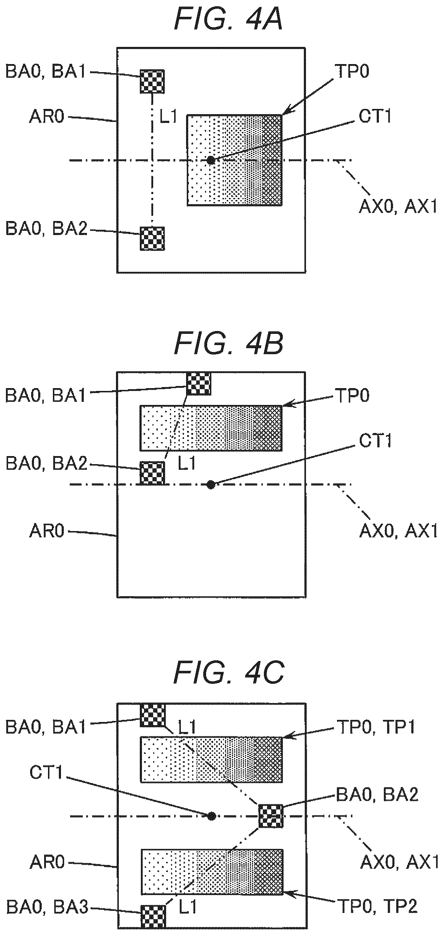

The multiple blur sensing regions BA0 may include a third blur sensing region BA3 separate from the first blur sensing region BA1 and the second blur sensing region BA2, as shown in FIG. 4C by way of example. The control section 110 may sense whether the first blur sensing region BA1 included in the image IM1 is blurred, whether the second blur sensing region BA2 included in the image IM1 is blurred, and whether the third blur sensing region BA3 included in the image IM1 is blurred. The control section 110 may determine that the test pattern TP0 included in the image IM1 is not blurred when the control section 110 senses that none of the first blur sensing region BA1, the second blur sensing region BA2, and the third blur sensing region BA3 is blurred.

For example, when the imaging section 120 is so shaken relative to the imaging target region AR0 that the distance to each of the two blur sensing regions (BA1 and BA2) does not change but the distance to the third blur sensing region BA3 changes, the test pattern TP0 in the image IM1 is blurred. In this case, even when it is not sensed that the two blur sensing regions (BA1 and BA2) in the image IM1 are blurred, but when it is sensed that the third blur sensing region BA3 in the image IM1 is blurred, it is not determined that the test pattern TP0 in the image IM1 is bot blurred. The aspect described above therefore allows more accurate determination that the test pattern included in an image from the imaging section is not blurred.

The multiple blur sensing regions may include a fourth blur sensing region and the like. Even in this case, the control section may determine that the test pattern included in an image is not blurred when the control section senses that none of the blur sensing regions is blurred. The additional remarks described above also apply to the following aspects.

### Fifth aspect

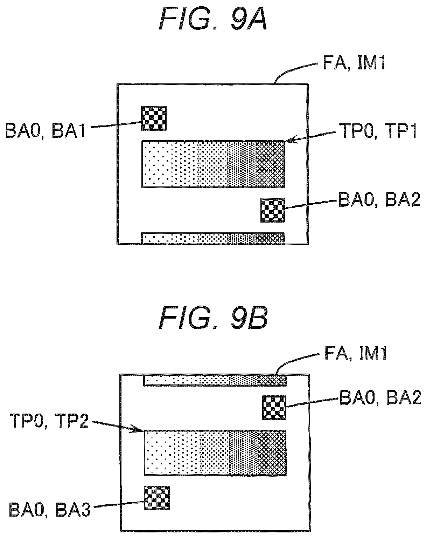

There may be multiple test patterns TP0, as shown in FIG. 4C. The multiple blur sensing regions BA0 may include the third blur sensing region BA3. The multiple test patterns TP0 may include a first test pattern TP1 between the first blur sensing region BA1 and the second blur sensing region BA2, and a second test pattern TP2 between the second blur sensing region BA2 and the third blur sensing region BA3. When the first blur sensing region BA1 and the second blur sensing region BA2 are included in the image IM1 as shown in FIG. 9A by way of example, the control section 110 may sense whether the first blur sensing region BA1 included in the image IM1 is blurred and whether the second blur sensing region BA2 included in the image IM1 is blurred. The control section 110 may determine that the first test pattern TP1 included in the image IM1 is not blurred when the control section 110 senses that neither the first blur sensing region BA1 nor the second blur sensing region BA2 is blurred. When the second blur sensing region BA2 and the third blur sensing region BA3 are included in the image IM1 as shown in FIG. 9B by way of example, the control section 110 may sense whether the second blur sensing region BA2 included in the image IM1 is blurred and whether the third blur sensing region BA3 included in the image IM1 is blurred. The control section 110 may determine that the second test pattern TP2 included in the image IM1 is not blurred when the control section 110 senses that neither the second blur sensing region BA2 nor the third blur sensing region BA3 is blurred.

In the case described above, the multiple test patterns TP0 on the medium ME0 can be separately imaged, as shown in FIGS. 9A and 9B by way of example, and the control section 110 can accurately determine that none of the test patterns in the image is blurred. Furthermore, since the second blur sensing region BA2 is common to the two test patterns TP0 for determination of whether they are blurred, the number of the blur sensing regions can be reduced, and the consumption of media and recording agents (ink, for example) can be reduced.

The multiple test patterns may include a third test pattern and the like. The additional remark described above also applies to the following aspects.

### Sixth aspect

A program PR0 according to an aspect is a program PR0 for determining whether the test pattern TP0 used to adjust the printing characteristics of the printing apparatus (2) including the recording head 220, the test pattern TP0 included in the image IM1 acquired from the imaging section 120, which images the medium ME0 having the test pattern TP0 is blurred, and the program PR0 causes a computer (information terminal 1, for example) to realize an acquisition function FU1 and a determination function FU2, as shown in FIGS. 2, 7, and 11 by way of example. The acquisition function FU1 acquires the image IM1 of the imaging target region AR0 from the imaging section 120. The determination function FU2 senses whether the first blur sensing region BA1 included in the image IM1 is blurred and whether the second blur sensing region BA2 included in the image IM1 is blurred, and determines that the test pattern TP0 included in the image IM1 is not blurred when the result of the sensing shows that neither the first blur sensing region BA1 nor the second blur sensing region BA2 is blurred.

The aspect described above can provide a program capable of accurately determining that the test pattern included in an image from the imaging section is not blurred.

### Seventh aspect

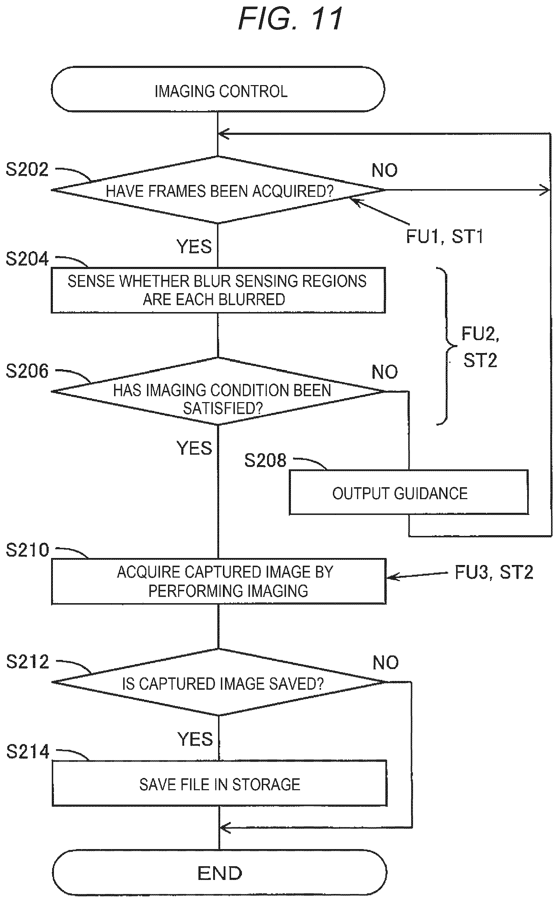

The image IM1 may be frames FR0 repeatedly acquired from the imaging section 120, as shown in FIG. 11 by way of example. The program PR0 may cause the computer (1) to further realize an imaging control function FU3 of acquiring a captured image IM0 by causing the imaging section 120 to image the imaging target region AR0 in response to a trigger that is satisfaction of an imaging condition including a condition that the test pattern TP0 included in the frames FR0 is determined not to be blurred.

The configuration described above, in which the imaging target region AR0 is imaged in response to a trigger that is satisfaction of the imaging condition including the condition that the test pattern TP0 included in the frames FR0 is determined not to be blurred, prevents the test pattern TP0 included in the captured image IM0 from being blurred. The aspect described above therefore allows acquisition of a captured image showing the test pattern with an accurately suppressed blur.

Various examples of the aspect described above are conceivable.

Acquiring a captured image may be storing a captured image provided from the imaging section in a memory, or may be controlling a direct memory access (DMA) controller to cause it to store the captured image in a memory. The storage in the memory includes storage in a random access memory (RAM) and storage in a nonvolatile memory.

The frame means an image indicated by a signal output from the imaging section on a frame period basis.

The additional remarks described above, of course, also apply to the following aspects.

### Eighth aspect

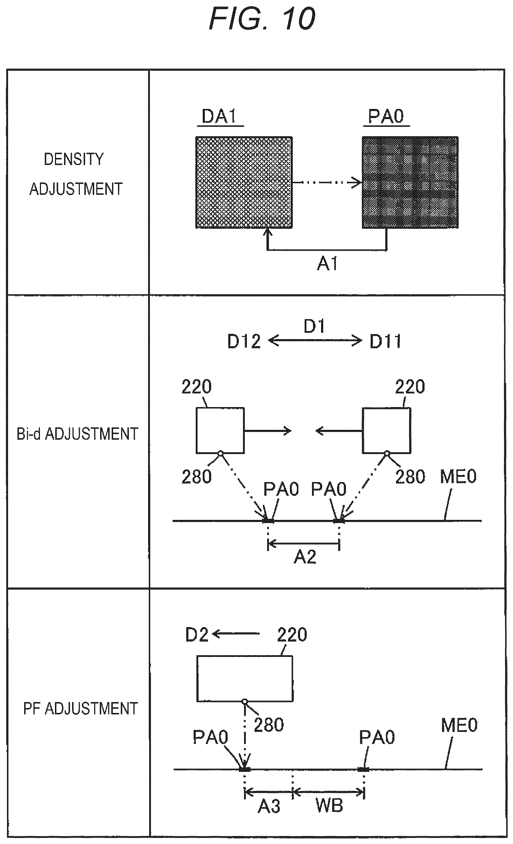

A printing characteristic adjustment method according to an aspect is a method for causing the imaging section 120 to image the medium ME0 having the imaging target region AR0 including the test pattern TP0 used to adjust the printing characteristics of the printing apparatus (2) including the recording head 220 and adjusting the printing characteristics based on the test pattern TP0 included in the resultant captured image IM0, and includes the following steps as shown in FIG. 7 and 11 by way of example.
(a1) A first step ST1 of acquiring the image IM1 of the imaging target region AR0 from the imaging section 120.
(a2) A second step ST2 of sensing whether the first blur sensing region BA1 included in the image IM1 is blurred and whether the second blur sensing region BA2 included in the image IM1 is blurred, and acquiring the captured image IM0 when the result of the sensing shows that neither the first blur sensing region BA1 nor the second blur sensing region BA2 is blurred.
(a3) A third step ST3 of determining adjustment values (A1 to A3) used to adjust the printing characteristics based on the test pattern TP0 included in the captured image IM0.
(a4) A fourth step ST4 of adjusting the printing characteristics based on the adjustment values (adjustment values A1 to A3 shown in FIG. 10, for example).

When it is sensed that neither the first blur sensing region BA1 nor the second blur sensing region BA2 is blurred, the captured image IM0 is so acquired that the blur of the test pattern TP0 is accurately suppressed. The aspect described above can therefore provide a printing characteristic adjustment method capable of accurately determining that the test pattern included in an image from the imaging section is not blurred and accurately adjusting the printing characteristic based on the test pattern with a suppressed blur.

Furthermore, the aspect described above is applicable to an information terminal including the control section described above, a method for controlling the information terminal, a non-transitory computer-readable medium on which the program described above is recorded, a printing method performed by the printing system described above, a control program of the printing system described above, a non-transitory computer-readable medium on which the control program is recorded, and the like. Any of the apparatuses described above may be configured with multiple dispersed portions.

### (2) Specific example of imaging control program:

FIG. 1 diagrammatically shows the printing system SY1 including the information terminal 1 and the printer 2 by way of example. FIG. 2 diagrammatically shows the configuration of the printing system SY1 by way of example. FIG. 3 diagrammatically shows the medium ME0 having the test pattern TP0 by way of example.

Examples of the information terminal 1 may include a mobile phone such as a smartphone, a tablet terminal, and the like. The information terminal 1 may be configured with multiple apparatuses divided so as to be capable of communicating with each other, or may be a stationary apparatus to which an imaging section is so coupled that the position thereof is changeable. The printer 2 is assumed to be an inkjet printer including the recording head 220 capable of discharging droplets 280. The printer 2 may, of course, be a thermal printer (including thermal transfer printer) including a thermal head as the recording head, an electrophotographic printer (laser printer, for example) including a recording head that causes toner to adhere to the medium ME0, a three-dimensional printer, or the like. The printer 2 may be configured with multiple apparatuses divided so as to be capable of communicating with each other.

The printer 2 can form the print image PI0 including the test pattern TP0, which is used to adjust the printing characteristics of the printer 2, on the medium ME0. A user US1 can adjust the printing characteristics of the printer 2 by causing the information terminal 1 including the imaging section 120 to image the test pattern TP0. When the user US1 images the test pattern TP0 while holding the information terminal 1 with his/her hand, a blurred captured image may be produced. When the imaging section 120 is shaken, the test pattern TP0 included in the captured image IM0 is blurred, and there is a possible case where the test pattern TP0 included in the captured image IM0 cannot be used. When the imaging section 120 is rotated, tilted, or shaken in any other manner, it is conceivable that the image blur is not properly sensed because the captured image IM0 has a portion where the image is blurred by a large amount and a portion where the image is blurred by a small amount. In the present specific example, the medium ME0 having the multiple blur sensing regions BA0 is used along with the test pattern TP0. The printing system SY1 then determines whether the test pattern TP0 is blurred based on the multiple blur sensing regions BA0 included in the image IM1 from the imaging section 120, which faces the imaging target region AR0 of the medium ME0. The determination described above is hereinafter called blur determination. The image IM1 is a concept including the captured image IM0 and the frames FR0, the latter of which will be described later.

Even when the information terminal 1 is not a portable apparatus but is a stationary apparatus, the blur determination may be made when an image blur occurs due to vibration caused by the operation of a machine installed near the information terminal 1, contact with a person, or the like. Irrespective of whether the information terminal 1 is portable or stationary, when the imaging section 120 and the control section 110 are external to the printer 2, the printer 2 is an aspect of the printing apparatus.

The printer 2 may instead include at least one of the imaging section 120 and the control section 110. Even when the printer 2 includes the imaging section 120, the imaging section 120 may be shaken due to vibration caused by the operation of pre-processing and post-processing machines installed near the printer 2, contact with a person, or the like. Therefore, when the printer 2 includes the imaging section 120, the control section 110 may perform the blur determination. In this case, the control section 110 may be inside the printer 2, may be outside the printer 2, or may partly be inside the printer 2 and partly be outside the printer 2. When the printer 2 includes the imaging section 120 and the control section 110, a portion of the printer 2 excluding the imaging section 120 and the control section 110 is an aspect of the printing apparatus.

A communication I/F (interface) 117 of the information terminal 1 can communicate with a communication I/F 230 of the printer 2. The information terminal 1 can transmit printing characteristic adjustment values and the like to the printer 2 via the communication I/Fs 117 and 230. Upon reception of the adjustment values, the printer 2 stores the adjustment values and adjusts the printing characteristics based on the adjustment values. The communication via the communication I/Fs 117 and 230 may be wireless communication compliant, for example, with a wireless local area network (LAN) standard, wired communication, or network communication such as the Internet.

The information terminal 1 shown in FIG. 2 includes the control section 110, a storage 114, an operation section 115, a display section 116, the communication I/F 117, and the imaging section 120. The information terminal 1 may include sensors SS1 and SS2 coupled to the control section 110. The control section 110 includes a central processing unit (CPU) 111, which is a processor, a read only memory (ROM) 112, and a random access memory (RAM) 113. The RAM 113 is an example of the memory that stores the image IM1 provided from the imaging section 120.

The storage 114 stores, for example, the program PR0 used to image the medium ME0 having the test pattern TP0. The storage 114 can, for example, be a nonvolatile semiconductor memory such as a flash memory. The storage 114 may be detachably attached to a main body of the information terminal 1. The display section 116 displays, based on display information, a screen corresponding to the display information. The display section 116 can, for example, be a liquid crystal display panel. The operation section 115 can be a touch panel attached to the surface of the display section 116, hardware keys, or the like.

The program PR0 causes the information terminal 1 to realize at least the acquisition function FU1 and the determination function FU2. In this case, it can be said that the program PR0 is a blur determination program for determining whether the test pattern TP0 is blurred. The program PR0 may further cause the information terminal 1 to realize the imaging control function FU3, as shown in FIG. 11 by way of example. In this case, it can be said that the program PR0 is an imaging control program for imaging the medium ME0. The CPU 111 reads information stored in the storage 114 as appropriate into the RAM 113 and executes the read program to carry out various processes. The CPU 111 can execute the program PR0 read into the RAM 113 to carry out processes corresponding to the functions (FU1 to FU3) described above. The information terminal 1 that executes the program PR0 carries out the first step ST1 of acquiring the image IM1, the second step ST2 of acquiring the captured image IM0, the third step ST3 of determining the adjustment values, and the fourth step ST4 of adjusting the printing characteristics, as shown in FIG. 7 by way of example. A computer-readable medium that stores the program PR0, which causes the computer to realize the functions (FU1 to FU3) described above, is not limited to the storage 114, and may be a recording medium external to the information terminal 1.

The imaging section 120 includes a lens 121, an autofocus (AF) unit 122, an image sensor 123, and the like. The image sensor 123 converts an image of light incident via the lens 121 and the AF unit 122 into an electric signal. It is assumed that the image sensor 123 in the present specific example outputs digital data corresponding to the electric signal from each light receiving element. The digital data is stored in the RAM 113 as the frames FR0 or the captured image IM0.The image sensor 123 can be a complementary metal-oxide semiconductor (CMOS) image sensor, a charge coupled device (CCD) image sensor, or the like. When the user US1 directs the imaging section 120 toward the medium ME0, the imaging section 120 can image the medium ME0.

The sensors SS1 and SS2 can be used to determine whether the imaging condition is satisfied. For example, the sensor SS1 may be a speed sensor that measures the moving speed of the imaging section 120 or an acceleration sensor that measures acceleration acting on the imaging section 120. In this case, the magnitude of the blur of the captured image IM0 can be detected based on a value measured by the sensor SS1. The sensor SS2 may be a distance measuring sensor that measures the distance from the imaging section 120 to the medium ME0. In this case, the distance from the imaging section 120 to the medium ME0 can be detected based on a value measured by the sensor SS2.

The printer 2 ejects C (cyan) ink, M (magenta) ink, Y (yellow) ink, and K (black) ink as color materials from the recording head 220 in the form of the droplets 280 to form the print image PI0 corresponding to print data. The recording head 220 includes multiple nozzles Nc capable of discharging C ink droplets to the medium ME0, multiple nozzles Nm capable of discharging M ink droplets to the medium ME0, multiple nozzles Ny capable of discharging Y ink droplets to the medium ME0, and multiple nozzles Nk capable of discharging K ink droplets to the medium ME0. The C, M, Y, and K inks are supplied from ink cartridges Cc, Cm, Cy, and Ck, respectively, to the recording head 220. The recording head 220 discharges the C, M, Y, and K droplets 280 from the nozzles Nc, Nm, Ny, and Nk, respectively, under the control of a controller 210. The droplets 280 each land on the medium ME0 to form an ink dot on the medium ME0. The printer 2 further includes a driver that changes the relative positional relationship between the recording head 220 and the medium ME0 under the control of the controller 210, for example, a transporting section 225, which transports the medium ME0 in a predetermined transportation direction. As a result, a printed matter configured with the medium ME0 having a pattern of the ink dots as the print image PI0 is produced. The medium ME0 is not necessarily made of a specific material and may be made, for example, of paper, fabric, resin, or metal. The medium ME0 may have a two-dimensional shape of a cut sheet, a rolled shape, or a three-dimensional shape.

The medium ME0 shown in FIG. 3 has the test pattern TP0 including multiple individual patterns PA0, multiple position detection patterns MK0, and multiple blur sensing regions BA0 separate from each other. The test pattern TP0 may, for example, be the density pattern, the Bi-d adjustment pattern, the transportation length adjustment pattern, or the nozzle check pattern. The position detection patterns MK0 are disposed on the medium ME0 at corners C0 of a rectangle including the test pattern TP0. When the position detection patterns MK0 are disposed at the four corners of the rectangle, the imaging target region AR0 including the test pattern TP0 is a rectangular region having the corners C0, which are the position detection patterns MK0, on the medium ME0. In FIG. 3, the rectangular imaging target region AR0 having vertical sides S1 and S2 and horizontal sides S3 and S4 is indicated by a two-dot chain line. The position detection patterns MK0 can each be a square ArUco marker having a specific geometric feature, a triangular pattern, or the like.

When the position detection patterns MK0 are not present on the medium ME0, the medium ME0 itself is the imaging target region AR0. In this case, the medium ME0 is preferably cut like a cut sheet, and preferably has a rectangular shape although not limited thereto.

The multiple blur sensing regions BA0 are disposed in the imaging target region AR0 to sense a shake of the imaging section 120 including rotation and tilt of the imaging section 120. Out of the multiple blur sensing regions BA0 shown in FIG. 3, a blur sensing region above the test pattern TP0 is called the first blur sensing region BA1, and a blur sensing region below the test pattern TP0 is called the second blur sensing region BA2. Note that which blur sensing region out of the multiple blur sensing regions BA0 is assigned to the first blur sensing region BA1 or the second blur sensing region BA2 is relatively determined. Therefore, the blur sensing region BA0 below the test pattern TP0 can be assigned to the first blur sensing region BA1, and the blur sensing region BA0 above the test pattern TP0 can be assigned to the second blur sensing region BA2.

In the imaging target region AR0 shown in FIG. 3, the first blur sensing region BA1 and the second blur sensing region BA2 are located at positions where the two blur sensing regions sandwich the test pattern TP0. An imaginary line L1, which couples the first blur sensing region BA1 and the second blur sensing region BA2 to each other, crosses the test pattern TP0. The fact that the two sensing regions (BA1 and BA2) are located at positions where the two sensing regions sandwich the test pattern TP0 means that the two sensing regions (BA1 and BA2) are so disposed in the imaging target region AR0 that the line L1 described above crosses the test pattern TP0.

FIG. 3 shows a symmetry axis AX1 along the horizontal sides S3 and S4 and a symmetry axis AX2 along the vertical sides S1 and S2 in the rectangular imaging target region AR0. Note that the symmetry axis AX0 collectively refers to the symmetry axes AX1 and AX2, and means an axis in the directions along the sides (S1 to S4) of the rectangle. The intersection of the symmetry axes AX1 and AX2 is the center CT1 of the imaging target region AR0. The first blur sensing region BA1 and the second blur sensing region BA2 are located at positions where the two blur sensing regions sandwich the symmetry axis AX0, that is, straight lines passing through the center CT1 of the imaging target region AR0. The fact that the two sensing regions (BA1 and BA2) are located at positions where the two sensing regions sandwich the symmetry axis AX0 means that the two sensing regions (BA1 and BA2) are so disposed in the imaging target region AR0 that the line L1 described above crosses the symmetry axis AX0. The two sensing regions (BA1 and BA2) shown in FIG. 3 are located at positions where the two sensing regions sandwich the symmetry axis AX1 and at positions where the two sensing regions sandwich the symmetry axis AX2. Note that the two sensing regions (BA1 and BA2) may not be located at positions where the two sensing regions sandwich the symmetry axis AX2 but may be located at positions where the two sensing regions sandwich the symmetry axis AX1. Instead, the two sensing regions (BA1 and BA2) may not be located at positions where the two sensing regions sandwich the symmetry axis AX1 but may be located at positions where the two sensing regions sandwich the symmetry axis AX2. In both cases, the two sensing regions (BA1 and BA2) are located at positions where the two sensing regions sandwich the symmetry axis AX0.

FIGS. 4A to 4C diagrammatically show various examples of the imaging target region AR0 including the test pattern TP0 and the multiple blur sensing regions BA0. The imaging target region AR0 may, of course, include the position detection patterns MK0.

In the imaging target region AR0 shown in FIG. 4A, the line L1, which couples the first blur sensing region BA1 and the second blur sensing region BA2 to each other, does not cross the test pattern TP0, but crosses the symmetry axis AX1 along the horizontal sides S3 and S4 shown in FIG. 3. Therefore, the two sensing regions (BA1 and BA2) shown in FIG. 4A are not located at positions where the two sensing regions sandwich the test pattern TP0 but are located at positions where the two sensing regions sandwich the symmetry axis AX1. Note that the two sensing regions (BA1 and BA2) shown in FIG. 4A are not located at positions where the two sensing regions sandwich the symmetry axis AX2 (see FIG. 3).

In the imaging target region AR0 shown in FIG. 4B, the line L1, which couples the first blur sensing region BA1 and the second blur sensing region BA2 to each other, does not cross the symmetry axis AX0, but crosses the test pattern TP0. Therefore, the two sensing regions (BA1 and BA2) shown in FIG. 4B are not located at positions where the two sensing regions sandwich the symmetry axis AX0, but are located at positions where the two sensing regions sandwich the test pattern TP0.

The imaging target region AR0 shown in FIG. 4C includes multiple test patterns TP0 and blur sensing regions BA0 the number of which is greater than the number of the test patterns TP0 by one. The multiple blur sensing regions BA0 shown in FIG. 4C include the third blur sensing region BA3 separate from the first blur sensing region BA1 and the second blur sensing region BA2. In the imaging target region AR0 shown in FIG. 4C, the first blur sensing region BA1, the second blur sensing region BA2, and the third blur sensing region BA3 are sequentially arranged from top to bottom. The multiple test patterns TP0 include the first test pattern TP1 between the first blur sensing region BA1 and the second blur sensing region BA2, and the second test pattern TP2 between the second blur sensing region BA2 and the third blur sensing region BA3. In the imaging target region AR0 shown in FIG. 4C, the line L1 that couples the first blur sensing region BA1 and the second blur sensing region BA2 to each other does not cross the second test pattern TP2, but crosses the first test pattern TP1. Therefore, the first blur sensing region BA1 and the second blur sensing region BA2 are not located at positions where the two sensing regions sandwich the second test pattern TP2, but are located at positions where the two sensing regions sandwich the first test pattern TP1. The line L1 that couples the second blur sensing region BA2 and the third blur sensing region BA3 to each other does not cross the first test pattern TP1, but crosses the second test pattern TP2. Therefore, the second blur sensing region BA2 and the third blur sensing region BA3 are not located at positions where the two sensing regions sandwich the first test pattern TP1, but are located at positions where the two sensing regions sandwich the second test pattern TP2.

FIGS. 5A to 5D grammatically show various examples of the blur sensing regions BA0. Elements (BP1 to BP4) shown in FIGS. 5A to 5D are not limited to monochrome images, and may be color images. The blur sensing regions BA0 may include elements different from the elements (BP1 to BP4) shown in FIGS. 5A to 5D.

The blur sensing region BA0 shown in FIG. 5A includes code information BP1 readable by the imaging section 120 and the control section 110. The code information BP1 may be a two-dimensional code as shown in FIG. 5A, a barcode, or the like. The control section 110 can sense whether the blur sensing region BA0 is blurred based on the code information BP1 included in the image IM1. For example, when the control section 110 cannot read the code information BP1 included in the image IM1, the control section 110 senses that the blur sensing region BA0 included in the image IM1 is blurred. When the control section 110 can read the code information BP1 included in the image IM1, the control section 110 senses that the blur sensing region BA0 included in the image IM1 is not blurred. Embedded information including the identification information ID0, which allows identification of each blur sensing region BA0, may be embedded in the code information BP1. The identification information ID0 may be serial numbers as identification numbers, for example, "No. 1" assigned to the first blur sensing region BA1, "No. 2" assigned to the second blur sensing region BA2, and so on. The embedded information may include the model name of the printer 2, the date and time when the test pattern TP0 is printed, information indicating that there are multiple media ME0 and further indicating the ordinal number of the medium ME0, and the like. The control section 110 can read the code information BP1 included in the image IM1, and can acquire the embedded information embedded in the code information BP1. The control section 110 can identify the test pattern TP0 to be read from the image IM1 based on the identification information ID0 embedded in the code information BP1.

The blur sensing region BA0 shown in FIG. 5B includes a ruled line pattern BP2 readable by the imaging section 120 and the control section 110. The ruled line pattern BP2 means a pattern including multiple ruled lines, and may be a grid-like pattern as shown in FIG. 5B, a geometric pattern, or the like. The control section 110 can sense whether the blur sensing region BA0 is blurred based on the ruled line pattern BP2 included in the image IM1. For example, the control section 110 determines the thickness of each of the ruled lines of the ruled line pattern BP2 included in the image IM1 based on the image IM1, and senses that the blur sensing region BA0 included in the image IM1 is not blurred when the control section 110 determines that the thickness of each of the ruled lines falls within a predetermined range. When the control section 110 determines that the thickness of each of the ruled lines described above does not fall within the predetermined range, the control section 110 senses that the blur sensing region BA0 included in the image IM1 is blurred.

The blur sensing region BA0 shown in FIG. 5C includes a density pattern BP3 readable by the imaging section 120 and the control section 110. The density pattern BP3 means a pattern having a ground color region that shows the ground color of the medium ME0 and a non-ground color region that does not show the ground color of the medium ME0. When the ground color of the medium ME0 is white, it can be said that the ground color region is a white region. When the non-ground color region is a region printed with the Kink, it can be said that the non-ground color region is a black region. The density pattern BP3 may be a black-and-white pattern having multiple circular, white regions in a quadrangular black region as shown in FIG. 5C, or may be a pattern in which the non-ground color region having a predetermined shape is surrounded by the ground color area. The control section 110 can sense whether the blur sensing region BA0 is blurred based on the density pattern BP3 included in the image IM1. For example, the control section 110 determines a ratio Sw/(Sw+Sk) of an area Sw of the ground color region to an entire area (Sw+Sk) of the density pattern BP3 in the density pattern BP3 included in the image IM1 based on the image IM1, and senses that the blur sensing region BA0 included in the image IM1 is not blurred when the control section 110 determines that the ratio Sw/(Sw+Sk) described above falls within a predetermined range. The ratio Sw/(Sw+Sk) may be replaced with a ratio Sk/(Sw+Sk) of the area Sk of the non-ground color region to the entire area (Sw+Sk) of the density pattern BP3. When the control section 110 determines that the ratio Sw/(Sw+Sk) or the ratio Sk/(Sw+Sk) does not fall within the predetermined range described above, the control section 110 senses that the blur sensing region BA0 included in the image IM1 is blurred.

The blur sensing region BA0 shown in FIG. 5D includes a character pattern BP4 readable by the imaging section 120 and the control section 110. The character pattern BP4 means a pattern including multiple characters. The control section 110 can sense whether the blur sensing region BA0 is blurred based on the character pattern BP4 included in the image IM1. For example, when the control section 110 cannot read the character pattern BP4 included in the image IM1 with OCR, the control section 110 senses that the blur sensing region BA0 included in the image IM1 is blurred. When the control section 110 can read the character pattern BP4 included in the image IM1 with OCR, the control section 110 senses that the blur sensing region BA0 included in the image IM1 is not blurred. The term OCR is an abbreviation for an optical character reader in the sense of an apparatus, and is an abbreviation for optical character recognition in the sense of a character recognition method. The character pattern BP4 may include identification information that allows identification of each blur sensing region BA0, or may include the model name of the printer 2, the date and time when the test pattern TP0 is printed, information indicating that there are multiple media ME0 and further indicating the ordinal number of the medium ME0, and the like. The control section 110 can identify the test pattern TP0 to be read from the image IM1 based on the identification information included in the character pattern BP4 included in the image IM1.

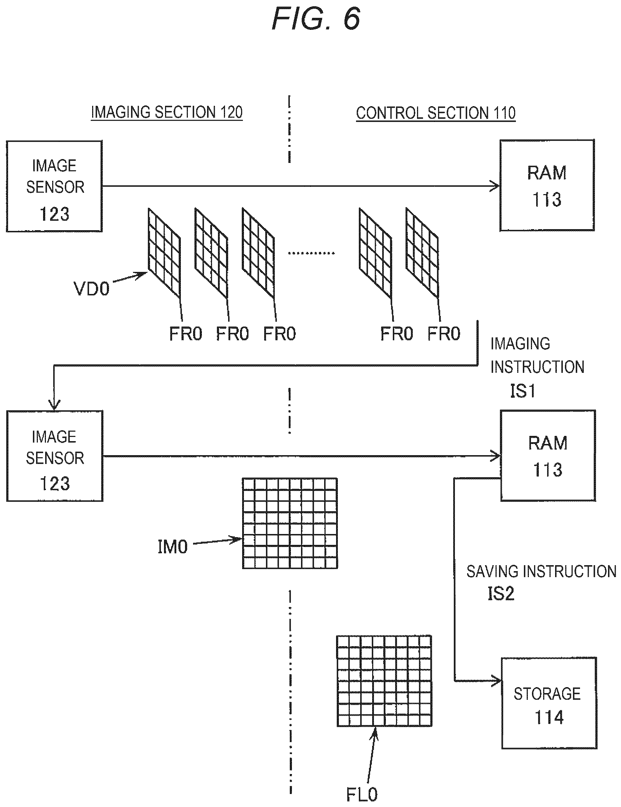

An example of the operation of the information terminal 1 that is performing imaging will next be described with reference to FIG. 6. The imaging is performed in response to a trigger that is the operation of pressing a shutter button provided in the operation section 115.

The frames FR0, which constitute a video VD0, are transferred from the image sensor 123 of the imaging section 120 to the RAM 113 of the control section 110 on a frame period basis. In this process, the CPU 111 may store the frames FR0 in the RAM 113, or the DMA controller, which is not shown, may store the frames FR0 in the RAM 113. The frames FR0 each represent a still image in each frame period, and may differ in information from the previous frame. Due to the processing performance of the information terminal 1, the frames FR0 each have resolution lower than that of the captured image IM0.It can also be said that the frames FR0 each have a smaller number of pixels than the captured image IM0. The control section 110 controls the AF unit 122 and other sections based on the group of the frames FR0. The control section 110 may cause the display section 116 to display each of the frames FR0.

When the user US1 performs the operation of pressing or touching the shutter button, the operation section 115 accepts the operation, and the operation section 115 notifies the control section 110 that the shutter button has been operated. The control section 110 then issues an imaging instruction IS1 to the imaging section 120 to cause the imaging section 120 to perform imaging. The captured image IM0 generated by the imaging has resolution higher than the frame FR0, and is stored in the RAM 113. Also in this process, the CPU 111 may store the captured image IM0 in the RAM 113, or the DMA controller, which is not shown, may store the captured image IM0 in the RAM 113.

When the user US1 performs the operation of saving the captured image IM0, the operation section 115 accepts the operation, and the operation section 115 notifies the control section 110 of a saving instruction IS2. The control section 110 then changes the formant of the captured image IM0 to the format of a file FL0 and saves the resultant captured image IM0 in the storage 114. That is, the storage 114 stores the file FL0. Examples of the file format may include the joint photographic experts group (JPEG) format and the bitmap format. Note that the control section 110 may accept settings such as the file format and the resolution of the captured image IM0 included in the file FL0 via the operation section 115 and save the file FL0 according to the settings in the storage 114. The control section 110 may instead automatically generate the file FL0 of the captured image IM0 in response to a trigger that is the storage of the captured image IM0 in the RAM 113, and store the generated file FL0 in the storage 114.

Note, however, that the button operation for the imaging may cause, for example, an image blur. In addition, the imaging section 120 may be shaken due to vibration caused by the operation of a machine installed near the imaging section 120, contact with a person, or the like. When the imaging section 120 is shaken, the test pattern TP0 included in the image IM1 from the imaging section 120 is blurred, and there is a possible case where the test pattern TP0 included in the captured image IM0 cannot be used. In particular, when the imaging section 120 is rotated, tilted, or shaken in any other manner, it is conceivable that the resultant image blur is not properly sensed because the image IM1 has a portion where the image is blurred by a large amount and a portion where the image is blurred by a small amount.

For example, it is assumed that a blur sensing region is placed at the center CT1 of the imaging target region AR0, and that the test pattern TP0 is located at a position shifted from the center CT1 in the imaging target region AR0. In this case, when the imaging section 120 is rotated or tilted around the center CT1, the blur sensing region itself moves a little, and the shake of the imaging section 120 is therefore not sensed, but the test pattern TP0, which is shifted from the center CT1, moves greatly. The test pattern TP0 included in the image IM1 from the imaging section 120 is therefore blurred.

In addition to the case described above, there is a case where the shake of the imaging section 120 is not sensed but the test pattern TP0 in the image IM1 is blurred.

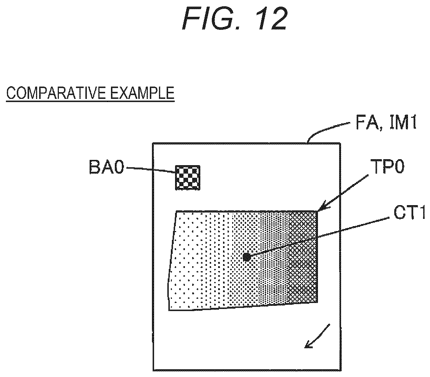

FIG. 12 diagrammatically shows that the image IM1 from the imaging section 120 is rotated around the blur sensing region BA0 and therefore blurred in Comparative Example. FIG. 12 shows a viewing angle FA of the imaging section 120. The viewing angle FA means an imaging range. The test pattern TP0 is located in a portion including the center CT1 of the imaging target region AR0 of the medium ME0, and the blur sensing region BA0 is located at a position shifted from the test pattern TP0. The arrow in FIG. 12 indicates rotary motion around the blur sensing region BA0.

When the imaging section 120 is rotated around the blur sensing region BA0, the blur sensing region BA0 itself moves a little, and the shake of the imaging section 120 is therefore not sensed, but the test pattern TP0, which is shifted from the center of rotation, moves greatly, as shown in FIG. 12. The test pattern TP0 included in the image IM1 is therefore blurred. The same applies to a case where the imaging section 120 is tilted with respect to the blur sensing region BA0.

In view of the facts described above, the printing system SY1 in the present specific example determines whether the test pattern TP0 is blurred based on the multiple blur sensing regions BA0 included in the image IM1 from the imaging section 120, which faces the imaging target region AR0 of the medium ME0, as shown in FIG. 3. The printing system SY1 then adjusts the printing characteristics based on the test pattern TP0 included in the captured image IM0.

### (3) Specific Example of printing characteristic adjustment:

FIG. 7 diagrammatically shows an example of printing characteristic adjustment performed by the control section 110. In the printing system SY1 shown in FIG. 3, the printing characteristic adjustment is performed in the information terminal 1, but when the printer 2 includes the control section 110, the printing characteristic adjustment is performed in the printer 2. Step S102 corresponds to the acquisition function FU1 and the first step ST1 of acquiring the image IM1. Steps S104 to S106 correspond to the determination function FU2. Steps S104 to S108 correspond to second step ST2 of acquiring the captured image IM0. Step S110 corresponds to the third step ST3 of determining the adjustment values. Step S112 corresponds to the fourth step ST4 of adjusting the printing characteristics. Hereinafter, the description of "step" may be omitted, and the reference characters of the steps may be shown in parentheses. The print characteristic adjustment starts, for example, when the control section 110 accepts a print characteristic adjustment instruction via the operation section 115. The adjustment instruction may be an operation performed on an adjustment instruction region displayed after the program PR0 is activated, an operation performed on the shutter button, the operation of activating the program PR0, or the like.

When the printing characteristic adjustment starts and the user US1 directs the imaging section 120 toward the imaging target region AR0 of the medium ME0, the control section 110 acquires the image IM1 of the imaging target region AR0 from the imaging section 120 (S102). The image IM1 from the imaging section 120 may be the frames FR0, and may instead be the captured image IM0 when it takes time to sense whether any of the blur sensing regions BA0 is blurred. In the example shown in FIG. 7, it is assumed that the image IM1 is the captured image IM0. When the control section 110 does not ascertain that the multiple blur sensing regions BA0 fall within the viewing angle FA (see FIGS. 8A and 8B) of the imaging section 120, any of the blur sensing regions BA0 may not be included in the captured image IM0. In this case, since the blur sensing region BA0 itself is not sensed from the captured image IM0 in the subsequent sensing process in S104, the control section 110 may determine that the test pattern TP0 is blurred in the subsequent determination process in S106.

The control section 110 may acquire the captured image IM0 by causing the imaging section 120 to image the imaging target region AR0 in response to a trigger that is satisfaction of the imaging condition including the first condition that the imaging target region AR0 falls within the viewing angle FA of the imaging section 120. The multiple blur sensing regions BA0 are thus included in the captured image IM0. The imaging condition described above may be a condition that at least an additional condition other than the first condition is satisfied. The additional condition may be at least one of a second condition that the amount of a change in the relative positional relationship between the imaging section 120 and the medium ME0 is smaller than or equal to a reference amount of the change, a third condition that the imaging section 120 falls within a predetermined range over which the imaging section 120 faces the imaging target region AR0, a fourth condition that the amount of distortion indicating distortion of the test pattern TP0 included in the frames FR0 is smaller than or equal to a reference amount of the distortion, a fifth condition that the length of an interval corresponding to the interval between the imaging section 120 and the medium ME0 is smaller than or equal to a reference length of the interval, and a sixth condition that the amount of brightness indicating the brightness of the ground color of the medium ME0 is greater than or equal to a reference amount of the brightness.

After acquiring the captured image IM0, the control section 110 senses whether any of the blur sensing regions BA0 included in the captured image IM0 is blurred based on the captured image IM0 (S104). When the imaging target region AR0 includes the first blur sensing region BA1 and the second blur sensing region BA2 as shown in FIG. 3, the control section 110 senses whether the first blur sensing region BA1 included in the captured image IM0 is blurred and whether the second blur sensing region BA2 included in the captured image IM0 is blurred. As described above, the control section 110 may sense that the first blur sensing region BA1 is blurred when the first blur sensing region BA1 itself is not sensed from the captured image IM0. The control section 110 may sense that the second blur sensing region BA2 is blurred when the second blur sensing region BA2 itself is not sensed from the captured image IM0.

When the blur sensing regions BA0 each include the code information BP1 as shown in FIG. 5A, and when the code information BP1 in any of the blur sensing regions BA0 in the captured image IM0 cannot be read, the control section 110 senses that the blur sensing region BA0 in the captured image IM0 is blurred. When the control section 110 can read the code information BP1 in each of the blur sensing regions BA0 in the captured image IM0, the control section 110 senses that none of the blur sensing regions BA0 in the captured image IM0 is blurred.

When the blur sensing regions BA0 each include the ruled line pattern BP2 as shown in FIG. 5B, the control section 110 determines the thickness of each of the ruled lines of the ruled line pattern BP2 in the captured image IM0 based on the captured image IM0. Thereafter, when the control section 110 determines that the thickness of the ruled line in any of the blur sensing regions BA0 does not fall within a predetermined range, the control section 110 senses that the blur sensing region BA0 in the captured image IM0 is blurred, and when the control section 110 determines that the thickness of the ruled line in each of the blur sensing regions BA0 falls within the predetermined range, the control section 110 senses that none of the blur sensing regions BA0 in the captured image IM0 is blurred.

When the blur sensing regions BA0 each include the density pattern BP3 as shown in FIG. 5C, the control section 110 determines the ratio Sw/(Sw+Sk) of the area Sw of the ground color region to the entire area (Sw+Sk) of the density pattern BP3 in the density pattern BP3 included in the captured image IM0 based on the captured image IM0. Thereafter, when the control section 110 determines that the ratio Sw/(Sw+Sk) in any of the blur sensing regions BA0 does not fall within the predetermined range, the control section 110 senses that the blur sensing region BA0 included in the captured image IM0 is blurred, and when the control section 110 determines that the ratio Sw/(Sw+Sk) in each of the blur sensing regions BA0 falls within the predetermined range, the control section 110 sense that none of the blur sensing regions BA0 included in the image IM1 is blurred. The ratio Sk/(Sw+Sk) may be used in place of the ratio Sw/(Sw+Sk).

In the configuration in which the blur sensing regions BA0 each include the character pattern BP4 as shown in FIG. 5D, when the character pattern BP4 in any of the blur sensing regions BA0 in the captured image IM0 cannot be read with OCR, the control section 110 senses that the blur sensing region BA0 in the captured image IM0 is blurred, and when the character pattern BP4 in each of the blur sensing regions BA0 in the captured image IM0 can be read with OCR, the control section 110 senses that none of the blur sensing regions BA0 in the captured image IM0 is blurred.

FIGS. 8A and 8B diagrammatically show the viewing angle FA of the imaging section 120 rotated and therefore shaken by way of example. The viewing angle FA corresponds to the image IM1 from the imaging section 120, for example, the captured image IM0.

FIG. 8A diagrammatically shows a case where the captured image IM0 is rotated around the first blur sensing region BA1 and therefore blurred. In this case, since the first blur sensing region BA1 moves a little, the control section 110 senses that the first blur sensing region BA1 is not blurred. However, the test pattern TP0 shifted from the center of rotation greatly moves. Since the first blur sensing region BA1 and the second blur sensing region BA2 sandwich the test pattern TP0, the second blur sensing region BA2 moves more greatly than the test pattern TP0. The control section 110 therefore senses that the second blur sensing region BA2 is blurred. The fact that the first blur sensing region BA1 and the second blur sensing region BA2 sandwich the symmetry axis AX0 also cause the second blur sensing region BA2 to move greatly, so that the control section 110 senses that the second blur sensing region BA2 is blurred. The same applies to a case where the imaging section 120 is tilted with respect to the first blur sensing region BA1 so that the captured image IM0 is blurred.

FIG. 8B diagrammatically shows a case where the captured image IM0 is rotated around the second blur sensing region BA2 and therefore blurred. In this case, since the second blur sensing region BA2 moves a little, the control section 110 senses that the second blur sensing region BA2 is not blurred. However, the test pattern TP0 shifted from the center of rotation greatly moves. Since the first blur sensing region BA1 and the second blur sensing region BA2 sandwich the test pattern TP0, the first blur sensing region BA1 moves more greatly than the test pattern TP0. The control section 110 therefore senses that the first blur sensing region BA1 is blurred. The fact that the first blur sensing region BA1 and the second blur sensing region BA2 sandwich the symmetry axis AX0 also cause the first blur sensing region BA1 to move greatly, so that the control section 110 senses that the first blur sensing region BA1 is blurred. The same applies to a case where the imaging section 120 is tilted with respect to the second blur sensing region BA2 so that the captured image IM0 is blurred.

When the imaging section 120 is translated and therefore shaken, the two blur sensing regions (BA1 and BA2) greatly move. The control section 110 therefore senses that the two blur sensing regions (BA1 and BA2) are blurred.

Three blur sensing regions BA0 included in the imaging target region AR0 may fall within the viewing angle FA, as shown in FIG. 4C. In this case, the control section 110 senses whether the first blur sensing region BA1 included in the captured image IM0 is blurred, whether the second blur sensing region BA2 included in the captured image IM0 is blurred, and whether the third blur sensing region BA3 included in the captured image IM0 is blurred. The control section 110 may sense that the third blur sensing region BA3 is blurred when the third blur sensing region BA3 itself is not sensed from the captured image IM0.

For example, when the imaging section 120 is so tilted and therefore blurred that the distance from the imaging target region AR0 to each of the two blur sensing regions (BA1 and BA2) does not change but the distance from the imaging target region AR0 to the third blur sensing region BA3 changes, the test pattern TP0 in the captured image IM0 is blurred. In this case, even when it is not sensed that none of the two blur sensing regions (BA1 and BA2) in the captured image IM0 is blurred, but it is sensed that the third blur sensing region BA3 in the captured image IM0 is blurred, it is determined that the test pattern TP0 in the captured image IM0 is blurred. Whether the test pattern TP0 included in the captured image IM0 is blurred can therefore be more accurately determined.

Note that also when four or more blur sensing regions BA0 fall within the viewing angle FA, the control section 110 may sense whether any of the blur sensing regions BA0 included in the captured image IM0 is blurred.

When multiple test patterns TP0 are included in the imaging target region AR0, the user US1 may separately image the multiple test patterns TP0, as shown in FIGS. 9A and 9B by way of example. FIG. 9A diagrammatically shows a case where the image IM1 from the imaging section 120, for example, the captured image IM0 includes the first test pattern TP1, the first blur sensing region BA1, and the second blur sensing region BA2. FIG. 9B diagrammatically shows a case where the image IM1 from the imaging section 120, for example, the captured image IM0 includes the second test pattern TP2, the second blur sensing region BA2, and the third blur sensing region BA3.

Out of the three blur sensing regions BA0 included in the imaging target region AR0, the third blur sensing region BA3 may not fall within the viewing angle FA, but the first blur sensing region BA1 and the second blur sensing region BA2 may fall within the viewing angle FA, as shown in FIG. 9A by way of example. In this case, the control section 110 may sense whether the first blur sensing region BA1 included in the captured image IM0 is blurred, and whether the second blur sensing region BA2 included in the captured image IM0 is blurred.

Out of the three blur sensing regions BA0 included in the imaging target region AR0, the first blur sensing region BA1 may not fall within the viewing angle FA, but the second blur sensing region BA2 and the third blur sensing region BA3 may fall within the viewing angle FA, as shown in FIG. 9B by way of example. In this case, the control section 110 may sense whether the second blur sensing region BA2 included in the captured image IM0 is blurred, and whether the third blur sensing region BA3 included in the captured image IM0 is blurred.

After the process in S104, the control section 110 determines whether none of the blur sensing regions BA0 having undergone the blur sensing is blurred (S106). When none of the blur sensing regions BA0 having undergone the blur sensing is blurred, the control section 110 determines that the test pattern TP0 included in the captured image IM0 is not blurred, and advances to the process in S108. When at least one of the blur sensing regions BA0 having undergone the blur sensing is blurred, the control section 110 determines that the test pattern TP0 included in the captured image IM0 is blurred, and returns to the process in S102. In this case, the control section 110 acquires the image IM1 of the imaging target region AR0, for example, the captured image IM0 from the imaging section 120 again, senses whether any of the blur sensing regions BA0 is blurred, and determines whether the test pattern TP0 is blurred.

For example, it is assumed that two blur sensing regions BA0 are included in the imaging target region AR0, as shown in FIG. 3. In this case, the control section 110 determines that the test pattern TP0 in the captured image IM0 is not blurred when the control section 110 senses that none of the two blur sensing regions (BA1 and BA2) is blurred, and determines that the test pattern TP0 in the captured image IM0 is blurred when the control section 110 senses that at least one of the blur sensing regions (BA1 and BA2) is blurred. When the captured image IM0 is rotated around the first blur sensing region BA1 and therefore blurred, as shown in FIG. 8A, the control section 110 senses that the first blur sensing region BA1 is not blurred and senses that the second blur sensing region BA2 is blurred. When the captured image IM0 is rotated around the second blur sensing region BA2 and therefore blurred, as shown in FIG. 8B, the control section 110 senses that the second blur sensing region BA2 is not blurred and senses that the first blur sensing region BA1 is blurred. In either case, the control section 110 determines that the test pattern TP0 in the captured image IM0 is blurred. The same applies to a case where the imaging section 120 is tilted with respect to one of the blur sensing regions (BA1 and BA2) so that the captured image IM0 is blurred.

It is assumed that three blur sensing regions BA0 are included in the imaging target region AR0, as shown in FIG. 4C. In this case, the control section 110 determines that the test pattern TP0 in the captured image IM0 is not blurred when the control section 110 senses that none of the blur sensing regions (BA1, BA2, and BA3) is blurred, and determines that the test pattern TP0 in the captured image IM0 is blurred when the control section 110 senses that at least one of the blur sensing regions (BA1, BA2, and BA3) is blurred.

Furthermore, it is assumed that the third blur sensing region BA3 does not fall within the viewing angle FA, but the first blur sensing region BA1 and the second blur sensing region BA2 falls within the viewing angle FA, as shown in FIG. 9A. In this case, the control section 110 determines that the first test pattern TP1 in the captured image IM0 is not blurred when the control section 110 senses that none of the two blur sensing regions (BA1 and BA2) is blurred, and determines that the first test pattern TP1 in the captured image IM0 is blurred when the control section 110 senses that at least one of the blur sensing regions (BA1 and BA2) is blurred.

In addition, it is assumed that the first blur sensing region BA1 does not fall within the viewing angle FA but the second blur sensing region BA2 and the third blur sensing region BA3 fall within the viewing angle FA, as shown in FIG. 9B. In this case, the control section 110 determines that the second test pattern TP2 in the captured image IM0 is not blurred when the control section 110 senses that none of the two blur sensing regions (BA2 and BA3) is blurred, and determines that the second test pattern TP2 in the captured image IM0 is blurred when the control section 110 senses that at least one of the blur sensing regions (BA2 and BA3) is blurred.

When the test pattern TP0 in the captured image IM0 is not blurred, the control section 110 changes the formant of the captured image IM0 to the format of the file FL0 and saves the resultant captured image IM0 in the storage 114 (S108). It can be said that the saving process in S108 is the process of acquiring the captured image IM0 when it is sensed that none of the blur sensing regions BA0 having undergone the blur sensing is blurred.

After saving the file FL0, the control section 110 determines adjustment values used to adjust the printing characteristics, for example, the adjustment values A1 to A3 shown in FIG. 10 based on the test pattern TP0 included in the captured image IM0 (S110). For example, the control section 110 identifies the position of the test pattern TP0 to be read between the blur sensing regions BA0 in the captured image IM0 based on the captured image IM0, and determines the adjustment value based on the pixel values of the test pattern TP0 located at the position. The determination and application of the adjustment values will be described later.

When the blur sensing regions BA0 each include readable code information BP1 and the identification information ID0, which allows identification of each of the blur sensing regions BA0, is embedded in the code information BP1, the control section 110 can read the code information BP1 included in the captured image IM0, as shown in FIG. 5A. The control section 110 may then acquire the identification information ID0 embedded in the code information BP1 in accordance with a predetermined decoding rule, and identify the position of the test pattern TP0 to be read between the blur sensing regions BA0 identified by the identification information ID0 based on the captured image IM0. When the position of the test pattern TP0 to be read is included in the code information BP1, the control section 110 can identify the position of the test pattern TP0 to be read by decoding the code information BP1. When multiple test patterns TP0 are included in the imaging target region AR0 as shown in FIG. 4C, the identification information ID0, such as serial numbers assigned to the test patterns TP0, may be embedded in the code information BP1. In this case, the control section 110 can identify the test pattern to be read out of the multiple test patterns TP0 by decoding the code information BP1 and acquiring the identification information ID0.

When the blur sensing regions BA0 each include a readable character pattern BP4 and the character pattern BP4 includes identification information that allows identification of each of the blur sensing regions BA0, as shown in FIG. 5D, the control section 110 can read the character pattern BP4 included in the captured image IM0 with OCR. The control section 110 may then acquire the identification information included in the character pattern BP4, and identify the position of the test pattern TP0 to be read between the blur sensing regions BA0 identified by the identification information based on the captured image IM0. When the position of the test pattern TP0 to be read is included in the character pattern BP4, the control section 110 can identify the position of the test pattern TP0 to be read by reading the character pattern BP4. When multiple test patterns TP0 are included in the imaging target region AR0 as shown in FIG. 4C, the identification information, such as serial numbers assigned to the test patterns TP0, may be included in the character pattern BP4. In this case, the control section 110 can identify the test pattern to be read out of the multiple test patterns TP0 by acquiring the identification information from the character pattern BP4.

After determining the adjustment values, the control section 110 adjusts the printing characteristic based on the adjustment values (S112), and terminates the printing characteristic adjustment. The printer 2 can thus print an image according to the adjustment values.

FIG. 10 diagrammatically shows an example of the adjustment of the printing characteristics.

The density adjustment means setting of an adjustment value A1 used to adjust the density of the print image PI0 to the density of an input image. For example, it is assumed that the print image Pl0 is denser than the input image, as shown in FIG. 10. In this case, the output density of any of the individual patterns PA0 included in the test pattern TP0 is higher than the density of individual pattern data DA1 used to form the individual pattern PA0. For example, the control section 110 can cause the printer 2 to perform the density adjustment by setting the adjustment value A1, which corresponds to the deviation of the output density of the individual pattern PA0 from the density of the individual pattern data DA1, in the controller 210 of the printer 2. The control section 110 may therefore acquire the adjustment value A1 for each of the individual patterns PA0 based on the pixel values of the individual pattern PA0 included in the captured image IM0 and the individual pattern data DA1 in S110 in FIG. 7. The control section 110 may set the adjustment value A1 in the controller 210 in S112 in FIG. 7. The controller 210 can adjust the density of the print image PI0 to the density of the input image by lowering the output density of the individual pattern PA0 corresponding to the individual pattern data DA1 to the density of the individual pattern data DA1 in accordance with the adjustment value A1. Of course, even when the density of the print image PI0 is lower than that of the input image, the density of the print image PI0 can be adjusted to the density of the input image by setting the adjustment value A1.

The Bi-d adjustment means setting an adjustment value A2 used to align the landing positions of the droplets 280 along the forward path and the landing positions of the droplets 280 along the backward path with each other in a primary scan direction D1 when the printer 2 repeats the primary scan and the secondary scan during printing. The forward path means the primary scan in which the recording head 220 moves in a forward direction D11, and the backward path means the primary scan in which the recording head 220 moves in a backward direction D12. It is, for example, assumed that the landing positions in the backward path to be aligned with the landing positions in the forward path in the primary scan direction D1 are shifted in the forward direction D11 from the landing positions in the forward path, as shown in FIG. 10. In this case, the position of each of the individual patterns PA0 formed on the medium ME0 in the backward path deviates in the forward direction D11 from the position of the individual pattern PA0 formed on the medium ME0 in the forward path. For example, the control section 110 can cause the printer 2 to perform the Bi-d adjustment by setting the adjustment value A2, which corresponds to the deviation of the position of the individual pattern PA0, in the controller 210 of the printer 2. The control section 110 may therefore acquire the adjustment value A2 described above based on the position of the individual pattern PA0 formed in the forward path and included in the captured image IM0 and the position of the individual pattern PA0 formed in the backward path and included in the captured image IM0 in S110 in FIG. 7. The control section 110 may set the adjustment value A2 in the controller 210 in S112 in FIG. 7. The controller 210 can delay the discharge timing of the droplets 280 from the recording head 220 in the backward path in accordance with the adjustment value A2 to align the landing positions of the droplets 280 in the forward path with those in the backward path in the primary scan direction D1. Of course, when the landing positions in the backward path to be aligned with the landing positions in the forward path in the primary scan direction D1 are shifted in the backward direction D12 from the landing positions in the forward path, the landing positions of the droplets 280 in the forward path can be aligned with those in the backward path in the primary scan direction D1 by setting the adjustment value A2.

PF adjustment as the transportation length adjustment means setting an adjustment value A3 used to exactly adjust the transportation length of the medium ME0 during the secondary scan in a secondary scan direction D2. The secondary scan direction D2 means the direction in which the recording head 220 moves relative to and with respect to the medium ME0, and the transport direction in which the medium ME0 moves relative to and with respect to the recording head 220 is the opposite direction of the secondary scan direction D2. Too large a transportation length of the medium ME0 during the secondary scan produces a streak that is a gap generated between band regions, for example, a light streak, and too small a transportation length of the medium ME0 during the secondary scan produces a streak that is dots overlapping with each other between band regions, for example, a dark streak. It is, for example, assumed that the interval between the inter-secondary-scan landing positions of the droplets 280 in the secondary scan direction D2 is greater than a width WB of a theoretical band region, as shown in FIG. 10. In this case, the interval between an individual pattern PA0 formed on the medium ME0 in a certain first pass and the individual pattern PA0 formed on the medium ME0 in a previous second pass is greater than the width WB of the band region. The control section 110 can, for example, cause the printer 2 to perform the PF adjustment by setting the adjustment value A3, which corresponds to the deviation of the interval between the individual patterns PA0 from the width WB of the band region, in the controller 210 of the printer 2. The control section 110 may therefore acquire the adjustment value A3 described above based on the position of the individual pattern PA0 formed in the first path and included in the captured image IM0 and the position of the individual pattern PA0 formed in the second path and included in the captured image IM0 in S110 in FIG. 7. The control section 110 may set the adjustment value A3 in the controller 210 in S112 in FIG. 7. The controller 210 can exactly adjust the transportation length of the medium ME0 during the secondary scan in the secondary scan direction D2 by reducing the transportation length of the medium ME0 during the secondary scan in accordance with the adjustment value A3. Of course, when the interval between the inter-secondary-scan landing positions of the droplets 280 in the secondary scan direction D2 is smaller than the width WB of the theoretical band region, the transportation length of the medium ME0 during the secondary scan can be exactly adjusted by setting the adjustment value A3.

The multiple blur sensing regions BA0 described above are in the imaging target region AR0. Therefore, even when a rotary or tilting blur occurs around one of the blur sensing regions (BA1 and BA2), it is sensed that one of the blur sensing regions (BA1 and BA2) is blurred. It is therefore determined that the test pattern TP0 in the image IM1 is blurred. The present specific example therefore allows accurate determination that the test pattern TP0 included in the image IM1 from the imaging section 120 is not blurred. As a result, the user US1 can readily adjust the various printing characteristics by imaging the test pattern TP0 with the portable information terminal 1 such as a camera-equipped portable terminal.

When there are multiple test patterns TP0 in the imaging target region AR0, the first test pattern TP1 is between the first blur sensing region BA1 and the second blur sensing region BA2, and the second test pattern TP2 is between the second blur sensing region BA2 and the third blur sensing region BA3, as shown in FIG. 4C, it can be accurately determined that none of the test patterns TP0 in the image IM1 is blurred. For example, it is conceivable that there are many printing characteristic adjustment items, and that the entire test pattern TP0 cannot be imaged in one imaging operation. In this case, for each test pattern TP0, the test pattern TP0 can be divided into smaller test pattern groups, and the test pattern groups can be imaged by forming the blur sensing regions BA0 on the medium ME0 on opposite sides that sandwich the test pattern TP0. In this process, the number of blur sensing regions BA0 can be reduced by forming common blur sensing regions BA0 on the medium ME0 that are included in both a first imaging range and a second imaging range. The consumption of recording agents, for example, ink used to print the blur sensing regions BA0 can thus be reduced. In addition, since the region where the blur sensing regions BA0 are recorded can be reduced, the consumption of the medium ME0 can also be reduced.

### (4) Variations:

There are various conceivable variations of the present disclosure.

The processes described above can be changed as appropriate, for example, the order of the processes can be changed. For example, in the printing characteristic adjustment in FIG. 7, the saving process in S108 can be carried out after the process in S110 or S112.

The image IM1 used to sense whether the blur sensing regions BA0 are blurred is not limited to the captured image IM0, and may be the frames FR0 repeatedly acquired from the imaging section 120.

FIG. 11 diagrammatically shows an example of the imaging control performed by the control section 110. S202 corresponds to the acquisition function FU1 and the first step ST1 of acquiring the image IM1. S204 to S206 correspond to the determination function FU2. S204 to S206 and S210 correspond to the second step ST2 of acquiring the captured image IM0. S210 corresponds to the imaging control function FU3. The imaging control function FU3 acquires the captured image IM0 by causing the imaging section 120 to image the imaging target region AR0 in response to a trigger that is satisfaction of the imaging condition including a no blur determination condition that it is determined that the test pattern TP0 included in the frames FR0 is not blurred. The program PR0 shown in FIG. 2 causes the information terminal 1 to image the appropriate test pattern TP0 by causing the imaging section 120 to automatically perform imaging in response to a trigger that is satisfaction of the imaging condition. It can be said that the information terminal 1 that executes the program PR0 realizes an automatic shutter system.

The imaging control starts when the control section 110 accepts the imaging instruction, which instructs imaging the imaging target region AR0, via the operation section 115. The imaging instruction may be an operation performed on an imaging instruction region displayed after the program PR0 is activated, an operation performed on the shutter button, the operation of activating the program PR0, or the like.

When the printing characteristic adjustment starts, the control section 110 determines whether a new frame FR0 has been transferred from the image sensor 123 to the RAM 113 (S202). The determination process in S202 is repeated until the new frame FR0 is transferred. It can also be said that the determination process in S202 is the process of determining whether the new frame FR0 has been acquired from the imaging section 120.

When the new frame FR0 is transferred, the control section 110 senses whether any of the blur sensing regions BA0 included in the frame FR0 is blurred based on the captured image IM0 (S204).

After the process in S204, the control section 110 determines whether the imaging condition is satisfied based on the result of the sensing whether any of the blur sensing regions BA0 is blurred (S206). The imaging condition includes the no-blur determination condition that it is determined that the test pattern TP0 included in the frames FR0 is not blurred. When the control section 110 senses that none of the blur sensing regions BA0 in the frames FR0 is blurred, the control section 110 determines that the test pattern TP0 in the frames FR0 is not blurred. That is, the control section 110 determines that the no-blur determination condition is satisfied. When the imaging condition including the no blur determination condition is not satisfied, the control section 110 outputs guidance for satisfying the imaging condition, such as "Please try not to shake the camera." is output (S208), and the control section 110 returns to the process in S206. The processes in S202 to S208 are thus repeated until the imaging condition is satisfied, and the control section 110 repeatedly acquires the frames FR0 from the imaging section 120, and senses whether any of the blur sensing regions BA0 in the frames FR0 is blurred. The output of the guidance may, for example, be displayed on the display section 116, or verbal output from a voice output section that is not shown.

Note that the imaging condition may be a condition that at least the no blur determination condition and an additional condition other than the no blur determination condition are satisfied. The additional condition may be at least one of the first condition that the imaging target region AR0 falls within the viewing angle FA of the imaging section 120, the second condition that the amount of a change in the relative positional relationship between the imaging section 120 and the medium ME0 is smaller than or equal to a reference amount of the change, the third condition that the imaging section 120 falls within a predetermined range over which the imaging section 120 faces the imaging target region AR0, the fourth condition that the amount of distortion indicating distortion of the test pattern TP0 included in the frames FR0 is smaller than or equal to a reference amount of the distortion, the fifth condition that the length of an interval corresponding to the interval between the imaging section 120 and the medium ME0 is smaller than or equal to a reference length of the interval, and the sixth condition that the amount of brightness indicating the brightness of the ground color of the medium ME0 is greater than or equal to a reference amount of the brightness.

When the imaging condition is satisfied, the control section 110 causes the imaging section 120 to image the imaging target region AR0 to acquire the captured image IM0 (S210). At this point in time, the CPU 111 may store the captured image IM0 from the image sensor 123 in the RAM 113, or the DMA controller may store the captured image IM0 from the image sensor 123 in the RAM 113. The captured image IM0 has resolution higher than the frames FR0.

The control section 110 thus acquires the captured image IM0 by causing the imaging section 120 to image the imaging target region AR0 in response to a trigger that is satisfaction of the imaging condition including the no blur determination condition.

After acquiring the captured image IM0, the control section 110 determines whether to save the captured image IM0 as the file FL0 (S212). For example, when the operation section 115 accepts the operation of saving the captured image IM0, the control section 110 changes the format of the captured image IM0 to the format of the file FL0, saves the resultant captured image IM0 in the storage 114 (S214), and terminates the printing characteristic adjustment. That is, the storage 114 stores the file FL0. When the operation section 115 accepts the operation of discarding the captured images IM0, the control section 110 terminates the printing characteristic adjustment without carrying out the saving process in S214.

In S212, the control section 110 may determine whether the test pattern TP0 included in the captured image IM0 is appropriate for adjustment of the printing characteristics. In this case, the control section 110 may carry out the saving process in S214 when the control section 110 has determined the test pattern TP0 is appropriate, or may return to the process in S202 when the control section 110 has determined the test pattern TP0 is inappropriate. The reason for this is that there is a time lag before actual imaging even when the imaging condition is satisfied. The control section 110 may further automatically generate the file FL0 of the captured image IM0 and store the file FL0 in the storage 114 in response to a trigger that is the storage of the captured image IM0 in the RAM 113 by carrying out the process in S214 without carrying out the determination process in S212.

As described above, since the imaging target region AR0 is imaged in response to a trigger that is satisfaction of the imaging condition including the no blur determination condition, the blur of the test pattern TP0 included in the captured image IM0 is suppressed. The captured image IM0 can therefore be so acquired that the blur of the test pattern TP0 is accurately suppressed.

### (5) Conclusions:

The various aspects of the present disclosure can provide a configuration and the like capable of accurately determining that a test pattern included in an image from the imaging section is not blurred, as described above. The basic effects and advantages described above can, of course, also be provided by aspects including only constituent requirements according to the independent claims.

In addition, it is conceivable to employ a configuration in which the elements disclosed in the examples described above are interchanged with each other or the combination of the elements is changed, a configuration in which the elements disclosed in known technologies and the examples described above are interchanged with each other or the combination of the elements is changed, and the like. The present disclosure also includes the configurations described above and the like.

## Claims

1. A printing system comprising:
a printing apparatus including a recording head and configured to form a test pattern used to adjust printing characteristics on a medium;
an imaging section configured to image the medium; and
a control section configured to cause the imaging section to image an imaging target region including the test pattern,
wherein the printing apparatus is configured to form multiple blur sensing regions used to sense a shake of the imaging section on the medium, the multiple blur sensing regions including a first blur sensing region and a second blur sensing region,
the multiple blur sensing regions are included in the imaging target region of the medium,
the first and second blur sensing regions are located at positions where the two blur sensing region sandwich at least one of a straight line passing through a center of the imaging target region and the test pattern, and
the control section is configured to acquire an image of the imaging target region from the imaging section, sense whether the first blur sensing region included in the image is blurred and whether the second blur sensing region included in the image is blurred, and determine that the test pattern included in the image is not blurred when the control section senses that none of the first and second blur sensing regions is blurred.

2. The printing system according to claim 1, wherein
the multiple blur sensing regions each include readable code information, and
the control section is configured to sense that the first blur sensing region included in the image is not blurred when the code information in the first blur sensing region included in the image is successfully read, and sense that the second blur sensing region included in the image is not blurred when the code information in the second blur sensing region included in the image is successfully read.

3. The printing system according to claim 2, wherein
identification information that allows identification of each of the multiple blur sensing regions is embedded in the code information, and
the control section is configured to read the code information included in the image, and identify the test pattern to be read from the image based on the identification information embedded in the code information.

4. The printing system according to claim 1, wherein
the multiple blur sensing regions include a third blur sensing region separate from the first and second blur sensing regions, and
the control section is configured to sense whether the first blur sensing region included in the image is blurred, whether the second blur sensing region included in the image is blurred, and whether the third blur sensing region included in the image is blurred, and determine that the test pattern included in the image is not blurred when the control section senses that none of the first, second, and third blur sensing regions is blurred.

5. The printing system according to claim 1, wherein
the test pattern is configured with multiple test patterns,
the multiple blur sensing regions include a third blur sensing region,
the multiple test patterns include a first test pattern between the first blur sensing region and the second blur sensing region and a second test pattern between the second blur sensing region and the third blur sensing region, and
when the first and second blur sensing regions are included in the image, the control section senses whether the first blur sensing region included in the image is blurred and whether the second blur sensing region included in the image is blurred, and when the control section senses that none of the first and second blur sensing regions is blurred, the control section determines that the first test pattern included in the image is not blurred, and
when the second and third blur sensing regions are included in the image, the control section senses whether the second blur sensing region included in the image is blurred and whether the third blur sensing region included in the image is blurred, and when the control section senses that none of the second and third blur sensing regions is blurred, the control section determines that the second test pattern included in the image is not blurred.

6. A non-transitory computer-readable storage medium storing a program for determining a blur of a test pattern included in an image acquired from an imaging section configured to image a medium having the test pattern, the test pattern used to adjust printing characteristics of a printing apparatus including a recording head,
the medium having an imaging target region having multiple blur sensing regions used to sense a shake of the imaging section, the multiple blur sensing regions including a first blur sensing region and a second blur sensing region,
the first and second blur sensing regions are located at positions where the two blur sensing region sandwich at least one of a straight line passing through a center of the imaging target region and the test pattern,
the program configured to cause a computer to realize
an acquisition function of acquiring an image of the imaging target region from the imaging section, and
a determination function of sensing whether the first blur sensing region included in the image is blurred and whether the second blur sensing region included in the image is blurred, and determining that the test pattern included in the image is not blurred when the determination function senses that none of the first and second blur sensing regions is blurred.

7. The non-transitory computer-readable storage medium storing the program according to claim 6, wherein
the image is configured with frames repeatedly acquired from the imaging section, and
the program causes the computer to further realize an imaging control function of acquiring a captured image by causing the imaging section to image the imaging target region in response to a trigger that is satisfaction of an imaging condition including a condition that it is determined that the test pattern included in the frames is not blurred.

8. A printing characteristic adjustment method for causing an imaging section to image a medium having an imaging target region including a test pattern used to adjust printing characteristics of a printing apparatus including a recording head and adjusting the printing characteristics based on the test pattern included in a resultant captured image,
the imaging target region of the medium having multiple blur sensing regions used to sense a shake of the imaging section, the multiple blur sensing regions including a first blur sensing region and a second blur sensing region,
the first and second blur sensing regions located at positions where the two blur sensing region sandwich at least one of a straight line passing through a center of the imaging target region and the test pattern,
the printing characteristic adjustment method comprising:
a first step of acquiring an image of the imaging target region from the imaging section;
a second step of sensing whether the first blur sensing region included in the image is blurred and whether the second blur sensing region included in the image is blurred, and acquiring the captured image when it is sensed that none of the first and second blur sensing regions is blurred;
a third step of determining an adjustment value used to adjust the printing characteristics based on the test pattern included in the captured image; and
a fourth step of adjusting the printing characteristic based on the adjustment value.

## Patentansprüche

1. Drucksystem, umfassend:
eine Druckvorrichtung, die einen Aufzeichnungskopf enthält und eingerichtet ist, ein Testmuster zu bilden, das zum Einstellen von Druckeigenschaften auf einem Medium verwendet wird;
einen Bildgebungsabschnitt, der eingerichtet ist, das Medium abzubilden; und
einen Steuerabschnitt, der eingerichtet ist, den Bildgebungsabschnitt zu veranlassen, einen Bildgebungszielbereich abzubilden, der das Testmuster enthält,
wobei die Druckvorrichtung eingerichtet ist, mehrere Unschärfeerfassungsbereiche zu bilden, die zum Erfassen eines Rüttelns des Bildgebungsabschnitts auf dem Medium verwendet werden, wobei die mehreren Unschärfeerfassungsbereiche einen ersten Unschärfeerfassungsbereich und einen zweiten Unschärfeerfassungsbereich enthalten,
die mehreren Unschärfeerfassungsbereiche in dem Bildgebungszielbereich des Mediums enthalten sind,
der erste und zweite Unschärfeerfassungsbereich sich an Positionen befinden, wo zwischen den zwei Unschärfeerfassungsbereichen mindestens eines von einer geraden Linie, die durch einen Mittelpunkt des Bildgebungszielbereichs verläuft, und dem Testmuster liegt, und
der Steuerabschnitt eingerichtet ist, ein Bild des Bildgebungszielbereichs aus dem Bildgebungsabschnitt zu erlangen, zu erfassen, ob der erste Unschärfeerfassungsbereich, der in dem Bild enthalten ist, unscharf ist, und ob der zweite Unschärfeerfassungsbereich, der in dem Bild enthalten ist, unscharf ist, und zu bestimmen, dass das Testmuster, das in dem Bild enthalten ist, nicht unscharf ist, wenn der Steuerabschnitt erfasst, dass keiner des ersten und zweiten Unschärfeerfassungsbereichs unscharf ist.

2. Drucksystem nach Anspruch 1, wobei
die mehreren Unschärfeerfassungsbereiche jeweils lesbare Codeinformationen enthalten und
der Steuerabschnitt eingerichtet ist zu erfassen, dass der erste Unschärfeerfassungsbereich, der in dem Bild enthalten ist, nicht unscharf ist, wenn die Codeinformationen in dem ersten Unschärfeerfassungsbereich, der in dem Bild enthalten ist, erfolgreich gelesen werden, und zu erfassen, dass der zweite Unschärfeerfassungsbereich, der in dem Bild enthalten ist, nicht unscharf ist, wenn die Codeinformationen in dem zweiten Unschärfeerfassungsbereich, der in dem Bild enthalten ist, erfolgreich gelesen werden.

3. Drucksystem nach Anspruch 2, wobei
Identifizierungsinformationen, die eine Identifizierung jedes der mehreren Unschärfeerfassungsbereiche ermöglichen, in den Codeinformationen eingebettet sind, und
der Steuerabschnitt eingerichtet ist, die Codeinformationen, die in dem Bild enthalten sind, zu lesen und das Testmuster, das aus dem Bild gelesen werden soll, basierend auf den Identifizierungsinformationen zu identifizieren, die in den Codeinformationen eingebettet sind.

4. Drucksystem nach Anspruch 1, wobei
die mehreren Unschärfeerfassungsbereiche einen dritten Unschärfeerfassungsbereich, separat von dem ersten und zweiten Unschärfeerfassungsbereich, enthalten, und
der Steuerabschnitt eingerichtet ist zu erfassen, ob der erste Unschärfeerfassungsbereich, der in dem Bild enthalten ist, unscharf ist, ob der zweite Unschärfeerfassungsbereich, der in dem Bild enthalten ist, unscharf ist, und ob der dritte Unschärfeerfassungsbereich, der in dem Bild enthalten ist, unscharf ist, und zu bestimmen, dass das Testmuster, das in dem Bild enthalten ist, nicht unscharf ist, wenn der Steuerabschnitt erfasst, dass keiner des ersten, zweiten und dritten Unschärfeerfassungsbereichs unscharf ist.

5. Drucksystem nach Anspruch 1, wobei
das Testmuster mit mehreren Testmustern konfiguriert ist,
die mehreren Unschärfeerfassungsbereiche einen dritten Unschärfeerfassungsbereich enthalten,
die mehreren Testmuster ein erstes Testmuster zwischen dem ersten Unschärfeerfassungsbereich und dem zweiten Unschärfeerfassungsbereich und ein zweites Testmuster zwischen dem zweiten Unschärfeerfassungsbereich und dem dritten Unschärfeerfassungsbereich enthalten, und
wenn der erste und zweite Unschärfeerfassungsbereich in dem Bild enthalten sind, der Steuerabschnitt erfasst, ob der erste Unschärfeerfassungsbereich, der in dem Bild enthalten ist, unscharf ist und ob der zweite Unschärfeerfassungsbereich, der in dem Bild enthalten ist, unscharf ist, und wenn der Steuerabschnitt erfasst, dass keiner des ersten und zweiten Unschärfeerfassungsbereichs unscharf ist, der Steuerabschnitt bestimmt, dass das erste Testmuster, das in dem Bild enthalten ist, nicht unscharf ist, und
wenn der zweite und dritte Unschärfeerfassungsbereich in dem Bild enthalten sind, der Steuerabschnitt erfasst, ob der zweite Unschärfeerfassungsbereich, der in dem Bild enthalten ist, unscharf ist und ob der dritte Unschärfeerfassungsbereich, der in dem Bild enthalten ist, unscharf ist, und wenn der Steuerabschnitt erfasst, dass keiner des zweiten und dritten Unschärfeerfassungsbereichs unscharf ist, der Steuerabschnitt bestimmt, dass das zweite Testmuster, das in dem Bild enthalten ist, nicht unscharf ist.

6. Nicht transitorisches, computerlesbares Speichermedium, das ein Programm zum Bestimmen einer Unschärfe eines Testmusters speichert, das in einem Bild enthalten ist, das aus einem Bildgebungsabschnitt erlangt wird, der konfiguriert ist, ein Medium mit dem Testmuster abzubilden, wobei das Testmuster zum Einstellen von Druckeigenschaften einer Druckvorrichtung verwendet wird, die einen Aufzeichnungskopf enthält,
wobei das Medium einen Bildgebungszielbereich mit mehreren Unschärfeerfassungsbereichen aufweist, die zum Erfassen eines Rüttelns des Bildgebungsabschnitts verwendet werden, wobei die mehreren Unschärfeerfassungsbereiche einen ersten Unschärfeerfassungsbereich und einen zweiten Unschärfeerfassungsbereich enthalten,
der erste und zweite Unschärfeerfassungsbereich sich an Positionen befinden, wo zwischen den zwei Unschärfeerfassungsbereichen mindestens eines von einer geraden Linie, die durch einen Mittelpunkt des Bildgebungszielbereichs verläuft, und dem Testmuster liegt,
wobei das Programm konfiguriert ist, einen Computer zur Umsetzung
einer Erlangungsfunktion zum Erlangen eines Bildes des Bildgebungszielbereichs aus dem Bildgebungsabschnitt, und
einer Bestimmungsfunktion zum Erfassen, ob der erste Unschärfeerfassungsbereich, der in dem Bild enthalten ist, unscharf ist und ob der zweite Unschärfeerfassungsbereich, der in dem Bild enthalten ist, unscharf ist, und Bestimmen, dass das Testmuster, das in dem Bild enthalten ist, nicht unscharf ist, wenn die Bestimmungsfunktion erfasst, dass keiner des ersten und zweiten Unschärfeerfassungsbereichs unscharf ist,
zu veranlassen.

7. Nicht transitorisches, computerlesbares Speichermedium zum Speichern des Programms nach Anspruch 6, wobei
das Bild mit Einzelbildern konfiguriert ist, die wiederholt aus dem Bildgebungsabschnitt erlangt werden, und
das Programm den Computer veranlasst, ferner eine Bildgebungssteuerungsfunktion zum Erlangen eines aufgenommenen Bildes umzusetzen, indem der Bildgebungsabschnitt veranlasst wird, den Bildgebungszielbereich als Reaktion auf einen Auslöser abzubilden, der eine Erfüllung einer Bildgebungsbedingung ist, enthaltend eine Bedingung, dass bestimmt wird, dass das in den Einzelbildern enthaltene Testmuster nicht unscharf ist.

8. Verfahren zum Einstellen von Druckeigenschaften zum Veranlassen eines Bildgebungsabschnitts, ein Medium mit einem Bildgebungszielbereich abzubilden, der ein Testmuster enthält, das zum Einstellen von Druckeigenschaften einer Druckvorrichtung, die einen Aufzeichnungskopf enthält, und Einstellen der Druckeigenschaften basierend auf dem Testmuster, das in einem resultierenden aufgenommenen Bild enthalten ist, verwendet wird,
wobei der Bildgebungszielbereich des Mediums mehrere Unschärfeerfassungsbereiche aufweist, die zum Erfassen eines Rüttelns des Bildgebungsabschnitts verwendet werden, wobei die mehreren Unschärfeerfassungsbereiche einen ersten Unschärfeerfassungsbereich und einen zweiten Unschärfeerfassungsbereich enthalten,
der erste und zweite Unschärfeerfassungsbereich sich an Positionen befinden, wo zwischen den zwei Unschärfeerfassungsbereichen mindestens eines von einer geraden Linie, die durch einen Mittelpunkt des Bildgebungszielbereichs verläuft, und dem Testmuster liegt,
wobei das Verfahren zum Einstellen von Druckeigenschaften umfasst:
einen ersten Schritt zum Erlangen eines Bildes des Bildgebungszielbereichs aus dem Bildgebungsabschnitt;
einen zweiten Schritt zum Erfassen, ob der erste Unschärfeerfassungsbereich, der in dem Bild enthalten ist, unscharf ist und ob der zweite Unschärfeerfassungsbereich, der in dem Bild enthalten ist, unscharf ist, und Erlangen des aufgenommenen Bildes, wenn erfasst wird, dass keiner des ersten und zweiten Unschärfeerfassungsbereichs unscharf ist;
einen dritten Schritt zum Bestimmen eines Einstellungswerts, der verwendet wird, um die Druckeigenschaften basierend auf dem Testmuster, das in dem aufgenommenen Bild enthalten ist, einzustellen; und
einen vierten Schritt zum Einstellen der Druckeigenschaften basierend auf dem Einstellungswert.

## Revendications

1. Système d'impression comprenant :
un appareil d'impression incluant une tête d'enregistrement et configuré pour former un motif de test utilisé pour régler des caractéristiques d'impression sur un support ;
une section d'imagerie configurée pour imager le support ; et
une section de commande configurée pour amener la section d'imagerie à imager une région cible d'imagerie incluant le motif de test,
dans lequel l'appareil d'impression est configuré pour former une multitude de régions de détection de flou utilisées pour détecter un tremblement de la section d'imagerie sur le support, la multitude de régions de détection de flou incluant une première région de détection de flou et une deuxième région de détection de flou,
la multitude de régions de détection de flou sont incluses dans la région cible d'imagerie du support,
les première et deuxième régions de détection de flou se situent à des positions où les deux régions de détection de flou prennent en sandwich l'un au moins parmi une ligne droite traversant un centre de la région cible d'imagerie et le motif de test, et
la section de commande est configurée pour acquérir une image de la région cible d'imagerie à partir de la section d'imagerie, détecter si la première région de détection de flou incluse dans l'image est floue et si la deuxième région de détection de flou incluse dans l'image est floue, et déterminer que le motif de test inclus dans l'image n'est pas flou lorsque la section de commande détecte qu'aucune parmi les première et deuxième régions de détection de flou n'est floue.

2. Système d'impression selon la revendication 1, dans lequel
les régions de détection de flou incluent respectivement des informations de code lisibles, et
la section de commande est configurée pour détecter que la première région de détection de flou incluse dans l'image n'est pas floue lorsque les informations de code dans la première région de détection de flou incluse dans l'image sont lues correctement, et détecter que la deuxième région de détection de flou incluse dans l'image n'est pas floue lorsque les informations de code dans la deuxième région de détection de flou incluse dans l'image sont lues correctement.

3. Système d'impression selon la revendication 2, dans lequel
des informations d'identification permettant d'identifier chacune parmi la multitude de régions de détection de flou sont incorporées dans les informations de code, et
la section de commande est configurée pour lire les informations de code incluses dans l'image, et identifier le motif de test à lire à partir de l'image sur la base des informations d'identification incorporées dans les informations de code.

4. Système d'impression selon la revendication 1, dans lequel
la multitude de régions de détection de flou incluent une troisième région de détection de flou distincte des première et deuxième régions de détection de flou, et
la section de commande est configurée pour détecter si la première région de détection de flou incluse dans l'image est floue, si la deuxième région de détection de flou incluse dans l'image est floue, et si la troisième région de détection de flou incluse dans l'image est floue, et pour déterminer que le motif de test inclus dans l'image n'est pas flou lorsque la section de commande détecte qu'aucune parmi les première, deuxième et troisième régions de détection de flou n'est floue.

5. Système d'impression selon la revendication 1, dans lequel
le motif de test est configuré avec une multitude de motifs de test,
la multitude de régions de détection de flou incluent une troisième région de détection de flou,
la multitude de motifs de test incluent un premier motif de test entre la première région de détection de flou et la deuxième région de détection de flou, et un deuxième motif de test entre la deuxième région de détection de flou et la troisième région de détection de flou, et
lorsque les première et deuxième régions de détection de flou sont incluses dans l'image, la section de commande détecte si la première région de détection de flou incluse dans l'image est floue et si la deuxième région de détection de flou incluse dans l'image est floue, et lorsque la section de commande détecte qu'aucune parmi les première et deuxième régions de détection de flou n'est floue, la section de commande détermine que le premier motif de test inclus dans l'image n'est pas flou, et
lorsque les deuxième et troisième régions de détection de flou sont incluses dans l'image, la section de commande détecte si la deuxième région de détection de flou incluse dans l'image est floue et si la troisième région de détection de flou incluse dans l'image est floue, et lorsque la section de commande détecte qu'aucune parmi les deuxième et troisième régions de détection de flou n'est floue, la section de commande détermine que le deuxième motif de test inclus dans l'image n'est pas flou.

6. Support de stockage non transitoire lisible par ordinateur stockant un programme destiné à déterminer un flou d'un motif de test inclus dans une image acquise à partir d'une section d'imagerie configurée pour imager un support comportant le motif de test, le motif de test étant utilisé pour régler des caractéristiques d'impression d'un appareil d'impression incluant une tête d'enregistrement,
le support comportant une région cible d'imagerie présentant une multitude de régions de détection de flou utilisées pour détecter un tremblement de la section d'imagerie, la multitude de régions de détection de flou incluant une première région de détection de flou et une deuxième région de détection de flou,
les première et deuxième régions de détection de flou se situent à des positions où les deux régions de détection de flou prennent en sandwich l'un au moins parmi une ligne droite traversant un centre de la région cible d'imagerie et le motif de test,
le programme étant configuré pour amener un ordinateur à réaliser :
une fonction d'acquisition permettant d'acquérir une image de la région cible d'imagerie à partir de la section d'imagerie, et
une fonction de détermination permettant de détecter si la première région de détection de flou incluse dans l'image est floue et si la deuxième région de détection de flou incluse dans l'image est floue, et de déterminer que le motif de test inclus dans l'image n'est pas flou lorsque la fonction de détermination détecte qu'aucune parmi les première et deuxième régions de détection de flou n'est floue.

7. Support de stockage non transitoire lisible par ordinateur stockant le programme selon la revendication 6, dans lequel
l'image est configurée avec des trames acquises de façon répétée à partir de la section d'imagerie, et
le programme amène l'ordinateur à réaliser en outre une fonction de commande d'imagerie permettant d'acquérir une image capturée en amenant la section d'imagerie à imager la région cible d'imagerie en réponse à un déclencheur consistant en la satisfaction d'une condition d'imagerie incluant une condition selon laquelle il est déterminé que le motif de test inclus dans les trames n'est pas flou.

8. Procédé de réglage de caractéristiques d'impression destiné à amener une section d'imagerie à imager un support comportant une région cible d'imagerie incluant un motif de test utilisé pour régler des caractéristiques d'impression d'un appareil d'impression incluant une tête d'enregistrement, et à régler les caractéristiques d'impression sur la base du motif de test inclus dans une image capturée résultante,
la région cible d'imagerie du support comportant une multitude de régions de détection de flou utilisées pour détecter un tremblement de la section d'imagerie, la multitude de régions de détection de flou incluant une première région de détection de flou et une deuxième région de détection de flou,
les première et deuxième régions de détection de flou se situent à des positions où les deux régions de détection de flou prennent en sandwich l'un au moins parmi une ligne droite traversant un centre de la région cible d'imagerie et le motif de test,
le procédé de réglage de caractéristiques d'impression comprenant :
une première étape d'acquisition d'une image de la région cible d'imagerie à partir de la section d'imagerie ;
une deuxième étape de détermination si la première région de détection de flou incluse dans l'image est floue et si la deuxième région de détection de flou incluse dans l'image est floue, et d'acquisition de l'image capturée lorsqu'il est détecté qu'aucune parmi les première et deuxième régions de détection de flou n'est floue ;
une troisième étape de détermination d'une valeur de réglage utilisée pour régler les caractéristiques d'impression sur la base du motif de test inclus dans l'image capturée ; et
une quatrième étape de réglage des caractéristiques d'impression sur la base de la valeur de réglage.
